# EUROPÄISCHE PATENTSCHRIFT

(11) **EP 0 928 007 B1**
(45) Veröffentlichungstag und Bekanntmachung des Hinweises auf die Patenterteilung: **08.10.2003**
(21) Anmeldenummer: 98123358.8
(22) Anmeldetag: 08.01.1996
(51) Int. Cl.: G21D 3/08

(54) **Verfahren und Vorrichtung zum Betrieb eines Reaktors im instabilen Zustand**
Method and device for operating a reactor in an unstable state
Procédé de conduite d'un réacteur dans des conditions de fonctionnement instable et système adapté à sa mise en oeuvre

(30) Priorität: 09.01.1995 DE 19500395
(43) Veröffentlichungstag der Anmeldung: 07.07.1999
(62) Teilanmeldung aus: 96900255.9
(73) Patentinhaber: Framatome ANP GmbH, 91050 Erlangen (DE)
(72) Erfinder: Kreuter, Dieter, 63322 Rödermark (DE); Godehard, Rauch, 63110 Rodgau (DE); Schulze, Joachim, 60598 Frankfurt (DE)
(74) Vertreter: Mörtel & Höfner

(56) Entgegenhaltungen:
- EP-A- 0 496 551
- WO-A-93/07623
- DD-A- 132 457
- US-A- 5 406 598
- PATENT ABSTRACTS OF JAPAN vol. 018, no. 356 (P-1765), 5. Juli 1994 & JP 06 094882 A (JAPAN ATOM ENERGY RES INST), 8. April 1994
- DATABASE WPI Section Ch, Week 8719 Derwent Publications Ltd., London, GB; Class K05, AN 87-133519 XP002098611 & JP 62 075295 A (NIPPON GENSHIRYOKU JIGYO KK), 7. April 1987
- DATABASE WPI Section Ch, Week 8540 Derwent Publications Ltd., London, GB; Class K05, AN 85-245097 XP002098612 & JP 60 159691 A (TOSHIBA KK) , 21. August 1985
- DATABASE WPI Section Ch, Week 8451 Derwent Publications Ltd., London, GB; Class K05, AN 84-314887 XP002098613 & JP 59 196499 A (NIPPON ATOMIC IND GROUP CO LTD), 7. November 1984

## Beschreibung

Die Erfindung betrifft ein Verfahren zum Betreiben eines Siedewasserreaktors, der durch lokale Oszillation einer physikalischen Größe (insbesondere der Leistung bzw. des damit verbundenen Neutronenflußes) in einem instabilen Zustand ist. Die Erfindung betrifft außerdem eine Vorrichtung zur Durchführung dieses Verfahrens sowie ein Verfahren und eine Vorrichtung zur Überwachung dieses instabilen Reaktorzustandes.

Die die Leistung eines Kernreaktors bestimmende Kernspaltung wird dadurch gesteuert, daß Absorberelemente zur Schwächung des Neutronenflußes in den Reaktorkern eingefahren werden. Dabei sind über den Reaktorkern Meßlanzen mit Sensoren für den Fluß thermischer Neutronen verteilt, um den Ist-Zustand zu erfassen. Um einen gewünschten Betriebszustand einzuregeln, muß dabei auch der Durchsatz an Kühlwasser, das gleichzeitig als Moderator dient, dem jeweiligen Zustand angepaßt sein.

Dieses Kühlwasser tritt als Flüssigkeit von unten in den Reaktorkern ein, durchströmt die Brennelemente, in denen es teilweise verdampft, und tritt als Dampf/Flüssigkeit-Gemisch aus dem Kern aus, wodurch das Brennstoff/Moderator-Verhältnis sich in den verschiedenen Teilen der Brennelemente ändert. Gleichzeitig ändern sich aber auch die Strömungsverhältnisse, insbesondere der Ort, an dem die 1-Phasen-Strömung, mit der das flüssige Kühlmittel in die Brennelemente eintritt, in die 2-Phasen-Strömung des Flüssigkeit/Dampf-Gemisches übergeht. Dabei sind bei hoher Leistung und niedrigem Kühlmitteldurchsatz instabile Zustände beobachtet worden, bei denen diese Phasengrenze in oszillierende Bewegung gerät, was eine Pulsation der Moderator-Dichte und der Leistung zur Folge hat, die auf die Kühlleistung und die Bewegung der Phasengrenze zurückwirkt. Dabei können in den Brennelementen periodische Temperaturschwankungen mit erheblichen Spitzenwerten auftreten.

Die zulässige Höchstleistung der Brennelemente ist hauptsächlich durch die Temperaturbeständigkeit der in den Brennelementen verwendeten Materialien begrenzt. Bei Überschreitung einer oberen Temperaturgrenze verlieren diese Materialien ihre mechanischen, chemischen und physikalischen Eigenschaften und können irreversible Änderungen erfahren, die zu einem Austausch der Brennelemente zwingen können. Daher muß darauf geachtet werden, daß im Reaktor diese thermisch-hydraulische Leistungsobergrenze (und damit ein thermisch-hydraulischer Grenzwert Aₜₕ des Neutronenflusses) nicht überschritten wird. Die Betriebsgenehmigungen der Reaktoren sehen daher vor, daß im Fall eines Überschreitens eines Grenzwertes eine Schnellabschaltung des Reaktors (sogenannter "SCRAM") vorgenommen wird, bei dem nach einem Notprogramm rasch alle Steuerstäbe eingefahren und die entsprechende Kühlleistung eingestellt wird.

Nach einem derartigen SCRAM muß der Reaktor nach einem betriebsmäßigen Anfahrprogramm wieder angefahren werden, so daß eine erhebliche Störung des Reaktorbetriebes vorliegt. Außerdem müssen die Brennelemente aus Sicherheitsgründen ausgewechselt werden, wenn der thermisch-hydraulische Grenzwert mehrfach oder über längere Zeit hinweg erreicht worden ist.

Daher wird angestrebt, einen derartigen instabilen Zustand möglichst frühzeitig zu erkennen und zu dämpfen, bevor diese Leistungspulsationen in die Nähe des thermisch-hydraulischen Grenzwertes gelangen.

Es hat sich gezeigt, daß diese Pulsationen stets in einem Frequenzbereich zwischen etwa 0,3 und 0,7 Hz auftreten und eine sehr konstante Frequenz aufweisen. Darauf baut das in der EP-A-0 496 551 beschriebene Verfahren zur Überwachung des Leistungschwankungsbandes für Kernreaktoren auf.

Dabei ist vorgesehen, den Fluß als Meßgröße für den durch die lokale Oszillation einer physikalischen Größe hervorgerufenen instabilen Zustand zu verwenden, wobei zu dieser Flußmessung die erwähnten Meßlanzen ("local power range monitor-strings", LPRM-strings) benutzt werden. Jede derartige Lanze enthält üblicherweise vier Sensoren, deren Signale ohnehin für die Leistungsteuerung beobachtet, weiterverarbeitet und dokumentiert werden.

Dabei wird jeder dieser vier Sensoren in jeder Meßlanze benutzt, wobei zwei Sensoren einem ersten Überwachungssystem, die beiden restlichen Sensoren einem redundanten zweiten Überwachungssystem zugeordnet sind. Jedes Überwachungssystem enthält dabei zwei Überwachungskanäle, wobei jedes Sensorsignal einer Meßlanze einem anderen Überwachungskanal zugeordnet ist. Den beiden Überwachungskanälen eines Systems liegen dabei unterschiedliche Aufteilungen des Reaktors in einzelne Bereiche ("Überwachungszellen") zugrunde, wobei jede Zelle von vier Meßlanzen zur Bildung eines entsprechenden Bereichsignals begrenzt ist. Je nach der Lage der Meßlanze im Kern (im Kerninneren oder am Rand des Kerns) gehört ein Sensorsignal in jedem Überwachungskanal zu zwei, drei oder vier Zellen. Durch diese Mehrfach-Verwendung der Sensorsignale soll erreicht werden, daß praktisch der Zustand jedes einzelnen Brennelements durch seinen Einfluß, den es auf die Sensorsignale der einzelnen Zellen hat, überwacht und identifiziert werden kann. Dazu ist vorgesehen, daß in einem System nur dann ein Alarm gesetzt wird, wenn beide Überwachungskanäle ansprechen. Für den Alarm genügt es zwar, wenn er von einem der beiden Systeme gegeben wird; jedoch ist dadurch nur eine einfache Redundanz gegeben.

Ein weiterer Nachteil ist, daß von einer Fehlmessung oder einem völligen Ausfall einer Meßlanze praktisch alle Überwachungskanäle betroffen sind, wobei es z. B. bei einer Randposition der Meßlanze dazu kommen kann, daß gleichzeitig mehrere Zellen nicht mehr ordnungsgemäß überwacht werden.

Der Zustand der einzelnen Zellen (Bereiche) wird dadurch überwacht, daß zunächst in einer Plausibilitätskontrolle überwacht wird, ob das einzelne Sensorsignal einen gewissen unteren Grenzwert überschreitet und ordnungsgemäß arbeitet. Bei einem Sensordefekt werden die zu dieser Zelle gehörenden Signale nicht weiter ausgewertet. Durch Summation aller Sensorsignale eines Bereiches wird ein aktuelles Bereichsignal gebildet, das aber unterdrückt wird, wenn (z.B. durch Fehlmessung) eine Plausibilitätsüberwachung ergibt, daß das Bereichsignal einen vorgegebenen Mindestwert nicht erreicht. Das Bereichsignal wird dann gefiltert und auf einen zeitlichen Mittelwert, dessen Zeitkonstante größer ist als eine Periode der Oszillation, bezogen, so daß ein relatives aktuelles Bereichssignal entsteht, das angibt, um wieviel Prozent die aktuelle Leistung des Bereichs über oder unter dem Mittelwert liegt.

Überschreitet dieser aktuelle Wert eine Leistungsgrenze (z. B. 120 %), so wird überprüft, ob es sich dabei um einen einmaligen Übergangszustand (sogenannte "Transiente") handelt, der z. B. nur ein aperiodisches Einschwingen auf einen neuen, die Steuerung vorgegebenen Betriebszustand darstellt, ohne eine Oszillation anzuregen. In diesem Fall handelt es sich also nicht um eine kritische Oszillation im Frequenzband 0,3 und 0,7 Hz, so daß kein Eingriff erfolgt, solange nicht ein in der Nähe des thermisch-hydraulischen Grenzwerts Aₜₕ liegender Grenzwert Aₘₐₓ erreicht ist.

Zur Detektion der kritischen Oszillation wird vielmehr untersucht, ob in einem diesem kritischen Frequenzband entsprechenden Zeitintervall nach dem Überschreiten eines Grenzwerts Aₒ auch ein entsprechender Grenzwert (z. B. 80 %) unterschritten wird, wie dies für eine Oszillation erforderlich ist. Wird auf diese Weise festgestellt, daß - entsprechend einer Oszillation - auf einen oberen Extremwert des Flusses ein unterer Extremwert folgt, so wird noch überprüft, ob auf diesen unteren Extremwert wieder ein oberer Extremwert folgt, und ob dieser folgende obere Extremwert einen Alarmwert überschreitet, der um einen vorgegebenen Faktor (z.B. 1,3) über dem zuerst detektierten Extremwert liegt. Ist dies der Fall, so wird bereits nach dieser einen Oszillationsperiode auf eine anwachsende ("aufklingende") Oszillation geschlossen, bei der eine Überschreitung von Aₜₕ droht, und der SCRAM wird eingeleitet, noch bevor der Wert Aₘₐₓ erreicht ist.

Im Hinblick auf die vorliegende Erfindung wird bereits jetzt darauf hingewiesen, daß bei diesem Stand der Technik zwar überwacht wird, ob die Oszillation mit einer über dem vorgegebenen Faktor (hier 1,3) liegenden Geschwindigkeit anwächst, jedoch wird das Anwachsen ("die Aufklingrate") der Extremwerte nicht selbst gemessen. Auch ist dieser Faktor (1,3) zwar insofern relativ, als er auf den zuerst detektierten Extremwert bezogen ist, jedoch ist er von der Aufklingrate unabhängig.

Außerdem wird darauf hingewiesen, daß zwar überprüft wird, ob der zeitliche Abstand der detektierten Extremwerte dem kritischen Frequenzband von 0,3 und 0,7 Hz entspricht, jedoch wird nicht überprüft, ob praktisch im gleichen zeitlichen Abstand DTₙ, der vom zuvor detektierten oberen Extremwert (als Aₙ₋₁ bezeichnet, Zeitpunkt Tₙ₋₁) und dem jetzt detektierten unteren Extremwert (Aₙ, Zeitpunkt Tₙ) gegeben ist, nach diesem Zeitpunkt Tₙ tatsächlich der nächste Extremwert Aₙ₊₁ folgt. Der für die Steuerung und Überwachung des Reaktors zuständige Fachmann kennt die übliche Technik zur Überwachung und Dokumentation der Sensorsignale und wäre daher ohne weiteres in der Lage, nicht nur die Extremwerte Aₙ₋₁, Aₙ, Aₙ₊₁ ... zu erfassen, sondern auch die Zeitpunkte Tₙ₋₁, Tₙ, Tₙ₊₁ ..., an denen diese Extremwerte auftreten. Er könnte daher ohne weiteres das entsprechende Bereichsignal unterdrücken, wenn der zeitliche Abstand DTₙ = Tₙ - Tₙ₋₁ nennenswert (z. B. 0,1 Sekunden) von dem zeitlichen Abstand DTₙ₊₁ = Tₙ₊₁ - Tₙ abweicht. Die EP-A-0 496 551 enthält hierauf aber keinerlei Hinweise.

Bei diesem Stand der Technik wird also bei einer Oszillation, deren (nicht gemessene) Aufklingrate unter dem eingestellten Faktor (1,3) liegt, zunächst nicht beachtet; sie führt vielmehr erst dann zu einem Eingriff in den Reaktorbetrieb, wenn ihre Extremwerte den Grenzwert Aₘₐₓ überschreiten. Nur schnell aufklingende Oszillationen führen dazu, daß dieser äußerst kritische Zustand bereits vorzeitig erkannt wird und zu geeigneten Gegenmaßnahmen führt. Offensichtlich wird davon ausgegangen, daß langsam aufklingende Oszillationen von selbst wieder abklingen und normalerweise keinen SCRAM erfordern.

Als Gegenmaßnahme sieht dieser Stand der Technik nämlich lediglich vor, die Oszillation durch rasches Einfahren praktisch aller Steuerstäbe (totaler SCRAM) zu dämpfen. Diese Strategie sieht also außer dem SCRAM keine weitere Maßnahme zur Dämpfung der Oszillation vor und verringert auch nicht die Wahrscheinlichkeit des SCRAM, der einen erheblichen Eingriff in den Reaktorbetrieb darstellt. Vielmehr findet, falls eine stark aufklingende Oszillation vorliegt, eine Dämpfung nur früher (also unterhalb von Aₘₐₓ) statt. Dadurch wird nur die thermische Belastung der Brennelemente verringert.

Die Aufgabe der vorliegenden Erfindung ist aber, derartige Oszillationen besser zu erkennen und die Oszillation möglichst so zu dämpfen, daß ein SCRAM überhaupt nicht mehr eingeleitet werden muß, also ohne Eingriff oder einen möglichst weniger störenden Eingriff in den Reaktorbetrieb auszukommen. Zu der Aufgabe gehört dabei auch eine geeignete, möglichst störsichere Überwachung des kritischen Zustands.

Die Erfindung sieht vor, durch Messung der physikalischen Größe (also des Neutronenflusses, soweit es sich um die erwähnten thermisch-hydraulisch bedingten Oszillationen handelt) in mehreren Bereichen des Reaktorkerns lokale Meßwerte zu bilden, die den jeweiligen Bereichen zugeordnet sind. Unter einer Hierarchie von Alarmstufen mit zugehörigen Überwachungskriterien wird durch Überwachung der Meßwerte eine aktuelle Alarmstufe gebildet, nämlich die höchste Alarmstufe, deren Überwachungskriterium von den Meßwerten in einer vorgegebenen Mindestzahl der Bereiche erfüllt ist. (Das Überwachungskriterium kann dabei aus mehreren einzelnen Bedingungen, z. B. das Überschreiten gesonderter Grenzwerte für die Amplitude und die Aufklingrate der Extremwerte, bestehen.) Entsprechend der aktuellen Alarmstufe wird dann eine Stabilisierungsstrategie eingeleitet. Als eine zu einer niedrigrangigen Alarmstufe gehörende Stabilisierungsstrategie ist vorgesehen, in die betriebsmäßige Steuerung und Regelung des Reaktors nur so einzugreifen, daß ein Entfernen der Steuerstäbe, wie es bei einem betriebsmäßigen Anheben der Reaktorleistung vorgesehen ist, zu blockieren: Vom Bedienungspersonal des Reaktors kann dann die Leistung des Reaktors nicht hochgefahren werden, vielmehr werden nur solche Steuerbefehle in der Reatorsteuerung wirksam, die der Steuerung des Reaktors auf gleichbleibende oder abnehmende Leistung entsprechen. In wenigstens einer höherrangigen Alarmstufe ist als Stabilisierungsstrategie vorgesehen, mehrere Steuerstäbe im Sinne einer Reduzierung der Reaktorleistung in den Kern einzubringen (Alarmstufe I). Vorteilhaft sind wenigstens zwei höherrangige Alarmstufen (Alarmstufe II und Alarmstufe III) vorgesehen, wobei in Alarmstufe II nur mehrere, einem Bruchteil der Gesamtzahl entsprechenden Steuerstäbe langsam und derart in den Kern eingefahren werden, wie es einer betriebsmäßigen Reduzierung der Leistung entspricht (d. h. die Reaktorsteuerung nimmt eine betriebsmäßige Reduzierung der Leistung vor, auch wenn z. B. an sich ein höherer Leistungsverbrauch eine höhere Reaktorleistung fordern würde und das Betriebspersonal die Reaktorleistung hochfahren will). In der zweiten höherrangigen Alarmstufe (Alarmstufe III) werden - ähnlich wie bei einer totalen Schnellabschaltung des Reaktors (totaler SCRAM) - Steuerstäbe rasch eingefahren, wovon aber ebenfalls nicht alle, sondern nur ein Teil der Steuerstäbe betroffen ist ("Teil-SCRAM"). Ein totaler SCRAM ist dann nicht mehr erforderlich, jedoch kann als Option eine Alarmstufe IV vorgesehen sein, die den SCRAM auslöst.

Insbesondere werden bei der Überwachung der Meßwerte mindestens zwei Perioden der Oszillation ausgewertet, so daß der Reaktor also zunächst unverändert weiterbetrieben wird, obwohl sich bereits eine Oszillation andeutet.

Ein Verfahren zum Betreiben eines Reaktors, der durch Oszillation einer im Kern auftretenden physikalischen Größe instabil ist, sieht ferner vor, durch Messung der physikalischen Größe einen Meßwert zu bilden, der die Aufklingrate der Oszillation erfaßt (gegebenenfalls auch weitere Meßwerte). In Abhängigkeit von diesem Meßwert wird eine Entscheidung getroffen, ob zur Dämpfung der Instabilität eine Stabilisierungsstrategie eingeleitet oder der Reaktor nach betriebsabhängig eingegebenen Meßwerten zunächst weiterbetrieben wird. Insbesondere kann dabei der Reaktor während der Messung der Aufklingrate mindestens zwei Oszillationsperioden weiter betrieben werden, ohne daß - sofern kein Meßwert einen zur Einleitung eines totalen SCRAM vorgesehenen Grenzwert nicht erreicht - in die Reaktorsteuerung eingegriffen wird. So kann z. B. erreicht werden, daß bei Überschreiten eines Grenzwerts Aₘₐₓ für die Oszillationsamplituden der SCRAM - entsprechend der erwähnten Alarmstufe IV - nur bei hohen Aufklingraten eingeleitet wird, jedoch bei niedrigen Aufklingraten der Reaktor noch mit höheren Amplituden betrieben wird, da bei so schwach anwachsenden Amplituden auch ein erst später eingeleiteter SCRAM (falls die Oszillation dann noch nicht von selbst abklingt) noch genügend Zeit besitzt, um vor Erreichen von Aₜₕ wirksam zu werden.

Bei diesem Verfahren wird vorzugsweise ein von der Aufklingrate abhängiger Schwellwert für die Extremwerte der oszillierenden physikalischen Größe vorgegeben und die Stabilisierungsstrategie wird eingeleitet, wenn die Extremwerte diesen Schwellwert überschreiten. Es kann aber auch ein Schwellwert für die Aufklingrate vorgegeben werden, wobei dann die Stabilisierungsstrategie eingeleitet wird, wenn die Aufklingrate diesen Schwellwert überschreitet. Bei einer ähnlichen Variante kann eine von der Aufklingrate abhängige Anzahl von Oszillationsperioden vorgegeben werden, um die Stabilisierungsstrategie erst einzuleiten, wenn die Oszillation der physikalischen Größe über die Dauer dieser Oszillationsperioden anhält.

Vorteilhaft sind dabei mehrere Stabilisierungsstrategien vorgesehen, unter denen die einzuleitende Stabilisierungsstrategie in Abhängigkeit von der Aufklingrate ausgewählt wird.

Zum Überwachen des instabilen Zustands des Reaktorkerns kann die Erfindung vorsehen, daß in mehreren Bereichen des Reaktorkerns jeweils mehrere Sensoren zur Meßung der physikalischen Größe angeordnet sind, wobei die Ausgangssignale der Sensoren zu einer Anzahl Mp von Bereichskanälen zusammengefaßt sind und jedem Bereichskanal jeweils ein Bereich und darin angeordnete Sensoren zum Erzeugen eines Bereichssignals zugeordnet sind. Die Bereichssignale sind dann zu einer Anzahl P von Systemkanälen zusammengefaßt, wobei jeweils mehrere Bereichskanäle einem Systemkanal, in dem sie ein Systemsignal erzeugen, zugeordnet sind. Die Systemsignale sind schließlich einem Endkanal zugeordnet, indem sie ein Endsignal erzeugen. Mittels Überwachungsstufen und Auswahlstufen wird dabei ein Alarmendsignal im Endsignal gesetzt, sobald über mehrere Oszillationsperioden hinweg mindestens in einer vorgegebenen Anzahl Np der Systemkanäle, und zwar in einer Mindestanzahl Nmp zwischen von Bereichskanälen dieses Systems, ein Überwachungskriterium erfüllt ist. Dabei beeinflußt das Ausgangssignal jedes Sensors höchstens ein Bereichsignal und jedes Bereichsignal höchstens ein Systemsignal. Die Bereichsignale eines Systemkanals werden jeweils aus den Ausgangssignalen von Sensoren gebildet, die in Bereichen liegen, die derart über den Querschnitt des Reaktorkerns verteilt sind, daß die jeweils einem solchen Bereich benachbarten Bereichen Sensoren enthalten, deren Ausgangssignale Bereichskanälen anderer Systemkanälen zugeordnet sind.

Durch diesen Verzicht auf Mehrfach-Auswertungen und Bereichsüberlappungen wird zwar nicht mehr jedes einzelne Brennelement so genau überwacht wie nach der EP-A-0 496 551, jedoch haben die Erfahrungen und Modellrechnungen mit instabilen Zuständen gezeigt, daß stets größere Teile des Reaktors, jedoch nicht isolierte Brennelemente in Oszillationen geraten, also keine Feinauflösung der Meßwerterfassung erforderlich ist. Außerdem erhöht sich die Redundanz und Störsicherheit der Erfassung.

Zum Überwachen des durch die lokale Oszillation instabilen Zustands bzw. zum entsprechenden Betrieb des Reaktors kann die Erfindung eine Vorrichtung vorsehen, die eine Systemauswahlstufe, eine Anzahl P von Bereichsauswahlstufen, für jede Bereichsauswahlstufe eine Anzahl Mp von Bereichsüberwachungsstufen und für jede Bereichsüberwachungsstufe eine Sensorstufe mit mehreren innerhalb eines Bereichs des Kerns angeordneten, dieser Bereichsüberwachungsstufe zugeordneten Sensoren enthält. Diese Vorrichtung ist dabei so ausgebildet, daß die jeweils einer Bereichsüberwachungsstufe zugeordneten Sensoren Meßsignale für die physikalische Größe liefern, die zu einem Bereichsignal zusammengefaßt sind, und daß jedes Bereichsignal in der den Sensoren zugeordneten Bereichsüberwachungsstufe nach einem Überwachungskriterium überwacht wird, wobei jede Bereichsüberwachungsstufe ein Bereichsignal liefert, das ein Bereichsüberwachungssignal enthält. Jedes Bereichsüberwachungssignal ist mindestens einer Bereichsauswahlstufe aufgeschaltet, die aus einer vorgegebenen Mindestzahl von Bereichsüberwachungssignalen ein Systemüberwachungssignal bildet. Jedes Systemüberwachungssignal ist dann der Systemauswahlstufe zugeführt; diese liefert mittels einer vorgegebenen Mindestzahl von Systemüberwachungsstufen ein Endüberwachungssignal.

Dabei umfaßt die Erfindung eine Vorrichtung zum Überwachen des durch die lokale Oszillation instabilen Reaktorzustands, bei dem in mehreren Bereichen des Reaktorkerns jeweils mehrere Sensoren zur Meßung der physikalischen Größe angeordnet sind und die Ausgangssignale mehrerer Sensoren eines Bereichs zu einem zugeordneten Bereichssignal zusammengefaßt sind. Jedem Bereichssignal ist ein Auswertestufe zugeordnet, die im Bereichssignal das Auftreten von Extremwerten der physikalischen Größe identifiziert (insbesondere über mehrere Oszillationsperioden hinweg) und bei einer Oszillation konstanter Frequenz und entsprechender Dauer die Aufklingrate der Extremwerte in diesem Bereich ermittelt. Den Rechenstufen ist mindestens eine Überwachungsstufe zugeordnet, die ein Alarmsignal setzt, wobei mindestens in einer vorgegebenen Anzahl von Bereichen die Extremwerte ein von der ermittelten Aufklingrate abhängiges lokales Überwachungskriterium erfüllen.

Im Hinblick auf vorgesehene Stabilisierungskriterien kann eine Vorrichtung zum Überwachen der lokalen Oszillationen Sensoren zur Meßung der physikalischen Größe enthalten, die in mehreren Bereichen des Reaktorkerns angeordnet sind und wobei die Ausgangssignale mehrerer Sensoren eines Bereichs zu einem zugeordneten Bereichsignal zusammengefaßt sind. Jedem Bereichsignal ist dann eine Auswertestufe zugeordnet, die im Bereichsignal das Auftreten einer Oszillation konstanter Frequenz identifiziert. Den Auswertestufen ist eine Endüberwachungsstufe zugeordnet, die aus einer Hierarchie von Alarmstufen eine Alarmstufe auswählt, entsprechend vorgegebenen Überwachungskriterien für die in mindestens einer vorgegebenen Anzahl von Bereichsignalen identifizierten Oszillationen. Die Endüberwachungsstufe legt dabei entsprechend der ausgewählten Alarmstufe einen Zeitpunkt (oder zumindest die Kriterien für den Zeitpunkt) fest, bei dem ein Notbefehl zum Einleiten einer der Alarmstufe entsprechenden Stabilisierungsstrategie abgegeben wird. Dieser Zeitpunkt kann z.B. durch eine Anzahl von Oszillationsperioden vorgegeben werden, die vor dem Einleiten einer Stabilisierungsmaßnahme abgewartet werden. Er kann aber auch dadurch festgelegt werden, daß in Abhängigkeit von momentanen Ist-Werten (z. B. Ist-Werten der Aufklingrate) ein Grenzwert (z. B. ein Grenzwert für die Amplitude) festgelegt wird, der zu einem späteren Zeitpunkt, an dem ein überwachter Ist-Wert (im Beispiel also die Amplitude) dann diesen vorbestimmten Grenzwert überschreitet, zur Auslösung der Stabilitätsmaßnahme führt.

Diese und weitere besondere Merkmale bei der Ausführung der Erfindung sind in den unabhängigen und abhängigen Ansprüchen angegeben, wobei viele der in Zusammenhang mit einem Verfahren beschriebenen Merkmale auch die Vorrichtung kennzeichnen können (und umgekehrt).

Anhand von elf Figuren und mehreren Ausführungsbeispielen wird die Erfindung näher erläutert. Es zeigen:
- Figur 1: das Schema der im Kern eines Siedewasserreaktors angeordneten Brennelemente und Meßlanzen sowie deren Zuordnung zu Überwachungsbereichen und Überwachungssystemen,
- Figur 2: eine Meßlanze mit vier Sensoren zur Überwachung eines Bereiches und eine diesen Sensoren zugeordnete Sensorstufe in einem dem Bereich zugeordneten Bereichskanal,
- Figur 3: eine Auswerteeinheit und eine Überwachungseinheit in diesem Bereichskanal,
- Figur 4: die Aufteilung der in verschiedenen Bereichen und Bereichskanälen erzeugten Bereichsignale in Systeme, die in jedem System vorhandenen Bereichsauswahlstufen sowie die Systemauswahlstufe zur Erzeugung der Alarmendsignale,
- Figur 5: eine kritische Oszillation im Meßwert des Flußes und deren Dämpfung bei einem SCRAM
- Figur 6: die jeweils mit einer anderen Aufklingrate ungedämpft anwachsenden Amplitudenwerte des Flußes bis zum Erreichen des thermisch-hydraulischen Grenzwerts Aₜₕ,
- Figur 7: den Zusammenhang zwischen der Aufklingrate DA und den bis zum Erreichen eines zulässigen Höchstwertes Aₘₐₓ zur Verfügung stehenden Oszillationsperioden,
- Figur 8: die bei verschiedenen Aufklingraten auftretenden Amplituden im Fall einer durch eine Stabilisierungsstrategie unzureichend gedämpften Oszillation,
- Figur 9: den Verlauf der Extremwerte (Amplituden) beim Betrieb des Reaktors mit einer verhältnißmäßig schwach anklingenden Oszillation nach einer bevorzugten Ausführungsform der Erfindung,
- Figur 10: den entsprechenden Verlauf bei einer rasch aufklingenden Oszillation, und
- Figur 11: eine Bereichsüberwachungsstufe bei einem bevorzugten Ausführungsbeispiel.

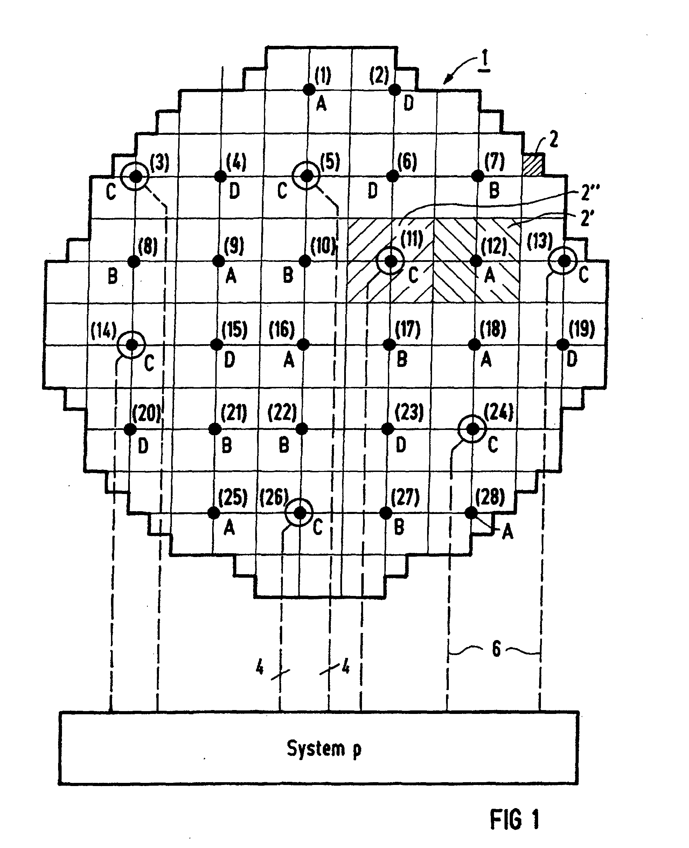

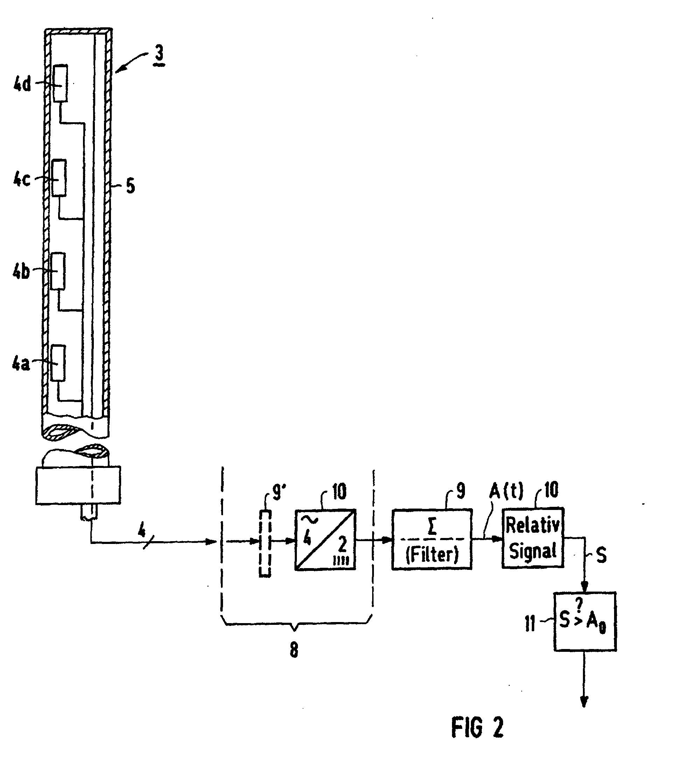

Figur 1 zeigt schematisch einen Querschnitt 1 durch einen Reaktorkern, in dem quadratische Brennelemente 2 schachbrettartig eng beieinander stehen. Mit Ausnahme der Randbereiche bilden jeweils vier derartige Brennelemente ein Quadrat, bei dem jeweils nur an einer einzigen Ecke eine der mit (1), (2)..(28) bezeichneten Meßlanzen angeordnet sind. Eine derartige Meßlanze ist also in der Regel an der gemeinsamen Ecke von vier aneinander stoßenden Quadraten aus jeweils vier Brennelementen angeordnet. Für die Auswertung der Signale dieser Meßlanzen sind - wiederum mit Ausnahme von Randbereichen - jeweils vier solcher Quadrate zu einem "Bereich" (z. B. die benachbarten, unterschiedlich schraffierten Bereiche 2', 2'') zusammengefaßt, die somit Schachbrettartig nahezu den gesamten Bereich des Kerns erfassen. Da jede Meßlanze (Position 3 in Figur 2) jeweils vier in einem Hüllrohr 5 übereinander angeordnete Sensoren 4a, 4b, 4c und 4d umfaßt, werden über die entsprechenden Meßleitungen 6 der Meßlanzen (1)..(28) jeweils vier Sensorsignale an die gesamte Vorrichtung zur Überwachung des Kern geliefert. Jede dieser Meßleitungen 6 führt somit die einem Bereich zugeordneten Sensorsignale.

In Figur 1 sind die einzelnen, jeweils einem Bereich zugeordneten Meßlanzen mit einem der Buchstaben A, B, C und D bezeichnet, wobei diese Buchstaben die Zuordnung der entsprechenden Meßlanzen und ihrer Sensorsignale zu einem System p von insgesamt p Überwachungssystemen (hier p = 4) angeben. Diese Überwachungssysteme arbeiten redundant und liefern jeweils ein eigenes Überwachungssignal und gegebenenfalls Alarmsignal, wobei diese Signale erst in einer Systemauswahl zu einem Endüberwachungssignal bzw. Endalarmsignal verarbeitet werden.

Der entsprechende, den Kern überwachende Monitor enthält also nur Systeme, die jeweils voneinander unabhängig sind (kein Sensorsignal wird in mehr als einem System verarbeitet) und die von ihnen überwachten Bereiche überlappen sich nicht. Bei Ausfall einer Meßlanze wird dann zwar ein ganzer Bereich aus 16 Brennelementen nicht mehr überwacht, jedoch wird davon nur eines der redundant arbeitenden Systeme beeinflußt, während die anderen Systeme von diesem Ausfall nicht betroffen sind. Sensoren benachbarter Bereiche sind dabei auch stets unterschiedlichen Systemen zugeordnet. Diese Prinzipien sind auch bei anderen Konfigurationen des Kerns (z.B. größere Kerne) und der Meßlanzen (z.B. 34 statt 28 Meßlanzen) beibehalten.

Im vorliegenden Fall sind die 28 Meßlanzen auf Systeme mit je sieben Bereichen verteilt (allgemein sei ein beliebiger Bereich mit m und die Gesamtzahl der Bereiche eines Systems p mit Mp bezeichnet. Im Beispiel gilt also für alle Systeme Mp = 7). Dabei erfaßen bei dieser Zuordnung alle Bereiche jeweils eine gleiche Anzahl (nämlich vier) Sensorsignale, während im allgemeinen Fall für die einzelnen Bereiche die Zahl der Sensorsignale auch unterschiedlich sein kann. Dies kann vor allem vorgesehen sein, wenn die oben angegebene "lineare" Zuordnung, bei der jeder Sensor höchstens einem einzelnen System zugeordnet ist, nicht vorgenommen wird.

Jedes Sensorsignal wird in seinem Bereichskanal zunächst mittels einer Auswahlstufe 8 einer Plausibilitätskontrolle unterworfen, wobei zunächst Sensorsignale ausgeschieden werden, die außerhalb des ordnungsgemäßen Arbeitsbereiches der Sensoren liegen, wie dies auch in der bereits erwähnten EP-A-0 496 551 vorgesehen ist. Aus den verbleibenden Ausgangssignalen von ordnungsgemäß arbeitenden Sensoren werden jedoch - im Unterschied zu diesem Stand der Technik - nur eine Mindestzahl (hier: zwei) ausgewählt, und zwar in der Regel die Signale der untersten, zur Verfügung stehenden Sensoren. Im allgemeinen unterscheiden sich nämlich die Signale von linear übereinander angeordneten Sensoren nur wenig und insbesondere zeigen sie praktisch ohne Phasenverschiebung die gleichen, auf die lokale Leistungspulsation in diesem Bereich zurückzuführenden zeitlichen Verläufe. Die Sensoren können daher prinzipiell einander ersetzen. Die Berücksichtigung der untersten Sensoren (4a und 4a in Figur 2) bietet jedoch einen geringen Vorteil, da in dem kritischen Bereich hoher Leistung und niedrigen Kühlmitteldurchsatzes der Fluß in den unteren Bereichen der Brennelemente ausgeprägtere Oszillationen ausführt als in den oberen Bereichen, also die entsprechenden Extremwerte (Amplituden) der Oszillation deutlicher erfaßbar sind.

Insbesondere kann dieser, von den Sensorsignalen gespeisten Auswahlstufe 8 ein analoges Filter 9' für die Sensorsignale vorgeschaltet sein, wobei die Auswahl der beiden für die Weiterverarbeitung freigegebenen Sensorsignale durch eine "2 aus 4"-Auswahl 10 ("2 out of 4") erfolgen kann, die gleichzeitig eine Umsetzung der analogen Eingangssignale in digitale Ausgangssignale vornehmen kann, so daß statt des vorgeschalteten analogen Filters 9' auch ein digitales Filter 9 nachgeschaltet werden kann. Außerdem wird bei diesem Filter 9 auch eine Summation der beiden Ausgangssignale der Auswahlstufe 8 vorgenommen, um einen über die Exemplarstreuung der einzelnen Sensoren gemittelten Momentanwert für den Fluß in den entsprechenden Bereich zu erhalten. Dies entspricht der Summation der Sensorsignale in den einzelnen "Zellen" der erwähnten EP-A-0 496 551, wobei allerdings bei diesem Stand der Technik das entsprechende "Zellensignal" von Sensorsignalen gebildet wird, die auch bei der Überwachung anderer Bereiche und in anderen Systemen verwendet werden.

Anschließend wird in einer Normierungseinheit aus dem aktuellen Signal A(t) am Ausgang des Filters 9 ein aktueller Meßwert A(t)-A* gebildet, der z.B. auf den mittleren Signalpegel A* dieses Bereichs normiert werden kann. Dieser mittlere Pegel kann, wie dies im Stand der Technik beschrieben ist, durch einen Integrator 10 dadurch gebildet werden, daß das über einen verhältnismäßig langen Integrationszeitraum erfaßte Signal A(t) integriert wird. Diese Normierung liefert einen abwechselnd positiven und negativen Meßwert, so daß die Oszillationsamplituden symmetrisch um einen Nullpunkt liegen und leicht erfaßbar sind. Eine digitale Signalverarbeitung ermöglicht aber auch ohne großen Aufwand auch bei anders normierten oder unnormierten Signalen S, jeweils die Amplitude einer Halbperiode zu erfassen, wobei dann vorteilhaft sein kann, daß Grenzwerte als Absolutwerte statt Relativwerte vorgegeben werden können.

Anschließend wird die weitere Verarbeitung des Signales S unterdrückt, solange es unter einem Grenzwert Ao für das normale Signalrauschen liegt und daher eine Bestimmung von Extremwerten ("Peaks" oder "Amplituden"), die einer Oszillation zugeordnet werden könnten, nicht möglich ist (Schwellwertglied 11).

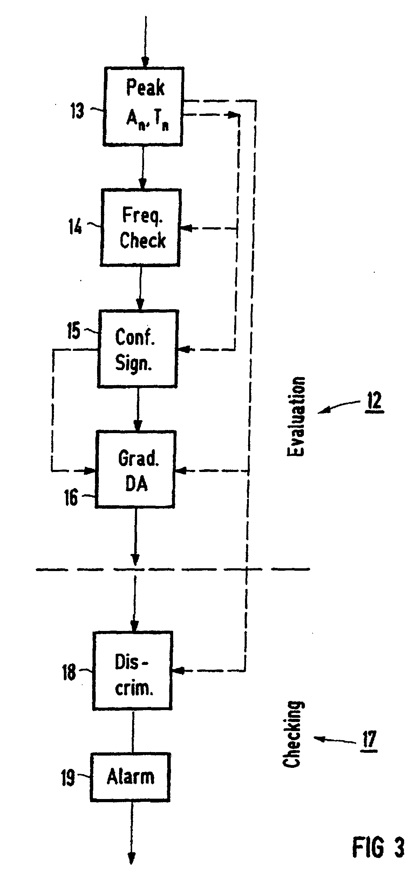

Gemäß Figur 3 enthält der Bereichskanal eines Systems p eine Auswertestufe 12, in der zunächst in einer ersten Rechenstufe der Zeitpunkt Tₙ festgehalten wird, an dem ein zunächst ansteigender, über der Rauschgrenze Ao liegender Signalwert S bis zu einem Extremwert Aₙ angestiegen ist und wieder abfällt (positiver Peak). Alternativ - oder vorzugsweise zusätzlich - wird als Peak Aₙ und dessen Zeitpunkt Tₙ auch ein negativer Peak erfaßt, d.h. ein jenseits der Rauschgrenze Ao liegender Extremwert, der durch einen zunächst abfallenden dann ansteigenden (negativen) Wert des Signals S gebildet ist. Dieser Extremwert-Erfassung 13 ist eine weitere Plausibilitätsüberwachung 14 nachgeschaltet, die z.B. so ausgebildet ist, wie in der EP-A-0 496 551 beschrieben ist und überprüft ob der in der Extremwert-Überwachung 13 erfaßbare Zeitabstand DTₙ zwischen dem aktuell erfaßten Zeitpunkt Tₙ und dem zuvor erfaßten Zeitpunkt Tₙ₋₁ einer Oszillation entsprechen kann, die innerhalb des kritischen Frequenzbandes zwischen 0,3 und 0,7 Hz liegt. Ein weiteres Auswerteglied 15 überprüft vorteilhaft zusätzlich, ob das erfaßte Zeitintervall DTₙ mit dem zuletzt erfaßten Zeitintervall DTₙ₋₁ praktisch zusammenfällt. Ist dies nicht der Fall, so handelt es sich bei den erfaßten Peaks nicht um die Amplituden einer Oszillation, die praktisch nicht gedämpft ist und bis zu gefährlichen Extremwerten aufklingen könnte; die weitere Auswertung des zuletzt ermittelten Peaks Aₙ wird dann unterdrückt. Handelt es sich dagegen um Werte, die der Amplitude einer oszillierenden Größe zugeordnet werden können, so wird durch ein entsprechendes Bestätigungssignal ("confirmation signal") ein nachfolgendes Rechenglied 16 aktiviert, das aus den zuletzt ermittelten Peaks deren "Aufklingrate" DA = (|Aₙ|-|Aₙ₋₁|)/Tₙ-Tₙ₋₁ ermittelt. Kann also der jeweilige Signalwert S mathematisch durch eine Größe S(t) ·Cosinus ΩT beschrieben werden, so entspricht diese Aufklingrate dem Differenzialquotienten dS(t)/dt. Er gibt z. B. bei Auswertung positiver und negativer Extremwerte den Zuwachs des Extremwertes jeweils nach einer Halbperiode DT=Tₙ-Tₙ₋₁ der Oszillation an.

In der Überwachungseinheit 17 ("checking") bildet nun ein Überwachungsglied 18 nach vorgegebenen, im folgenden noch genauer beschriebenen Überwachungskriterien ein Signal, das z.B. als Binärsignal im Zustand "0" angibt, daß keine den Überwachungskriterien entsprechende, gefährliche Oszillation vorliegt, während der Zustand "1" des entsprechenden Überwachungssignals einen Alarm (Position 19) anstößt. Dieses Alarmsignal kann, zusammen mit anderen Informationen, die z.B. den Bereich identifizieren, in dem das Überwachungskriterium angesprochen hat, an eine Anzeigeeinheit ausgegeben und/oder in einen Speicher zur Dokumentation des Vorgangs niedergelegt werden.

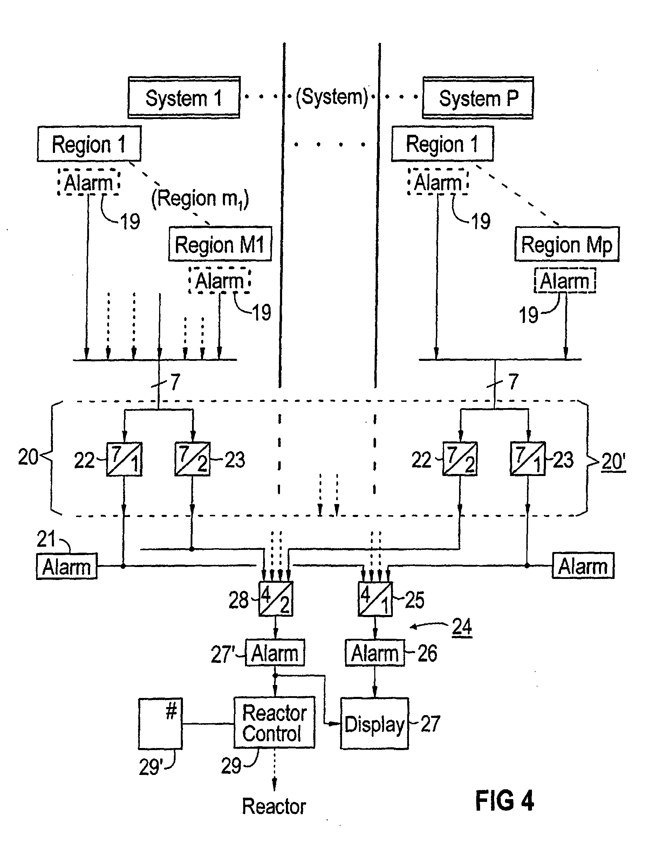

Dieser Aufbau des Bereichskanals m ist vorteilhaft in jedem Bereichskanal vorgesehen, wie in Figur 4 links oben im Feld "System 1" für jeden Bereich aus der Gesamtzahl M₁ der Bereiche des Systems p = und im rechten Feld "System P" für alle Bereiche (Gesamtzahl Mₚ) des Systems p = P angegeben ist.

Die (z. B. auch in das Element 19 eingegebenen) linearen Alarmbereichssignale stellen entsprechend der Anzahl Mₚ der Bereichskanäle ein Mₚ-faches Binärsignal dar, aus dem in einer Bereichsauswahlstufe 20 ein Nₘₚ-faches Binärsignal gebildet wird, um anzuzeigen, daß mindestens in einer Anzahl Nₘₚ der Bereiche dieses Systems ein einem Alarm entsprechendes Bit gesetzt wurde.

In Figur 4 werden die entsprechenden Alarm-Bereichssignale einmal zu einer optischen Anzeige 21 zusammengefaßt, wobei Nₘ=1 gewählt ist, d.h. der optische Alarm 21 wird ausgelöst, sobald wenigstens in einem Bereichskanal das dem Alarm entsprechende Bit gesetzt ist. Daher enthält jedes System ein Auswahlglied, bei dem Nₘₚ=1 vorgegeben ist, hier also eine "1 aus 7"-Auswahl 22 (z. B. bei digitaler Auswertung ein ODER-Glied) und setzt die optische Anzeige 21, während bei einem zweiten Auswahlglied 23 Nₘₚ=2 gesetzt wird, es sich also um eine "2 aus 7"-Auswahl handelt. Es soll nämlich erst dann ein entsprechendes Alarm-Bit im Bereichssignal gesetzt werden, wenn in mindestens zwei Bereichen des Systems jeweils das Überwachungskriterium erfüllt ist, um einen Fehlalarm durch Verarbeitungsfehler auszuschließen.

In einer Endstufe 24 ist nun eine System-Auswahl getroffen, die jeweils dann ein Alarm-Endsignal setzt, wenn aus der gesamtanzahl P der Systeme wenigstens eine Mindestanzahl Np ein gesetztes Alarmsignal enthält. Diese Systemauswahl besteht in diesem Fall aus einer auf Np=1 eingestellten "1 aus 4" Schaltung 25, die ein Alarmsignal (Position 26) ausgibt, das in einem Display 27 optisch angezeigt wird und angibt, daß in einem der Systeme eine kritische Oszillation entdeckt wurde. Eine auf Np=2 eingestellt "2 aus 4" Auswahl 28 setzt einen Alarm (Position 27') der einerseits im Display 27 ebenfalls angezeigt werden kann, andererseits auf die Steuerung des Reaktors ("Reaktor controll", Position 29) einwirkt und dort eine in einem Speicher 29' als entsprechendes Programm abgelegte Stabilisierungsstrategie auslöst.

Im allgemeinen können in jedem System die in den Figuren 2 und 3 dargestellten Verarbeitungsglieder des Bereichskanals durch einen zentralen Rechner mit einer eigenen Spannungsversorgung, einer zentralen Prozessoreinheit, einem Eingangsmodul für 32 analoge Eingangssignale und einem entsprechenden Ausgangsmodul für 32 digitale Ausgangssignale realisiert werden, der bei einer Arbeitsfrequenz von 32 MHz mit der Parallelverarbeitung der 28 Sensorsignale, die in dem 32-Bit-Eingang des Rechners enthalten sind, etwa zu 50 % ausgelastet ist. Eine vorteilhafte Abtastrate für die Eingangssignale beträgt 50 Hz oder mehr, mindestens aber 20 Hz. Die üblichen Verarbeitungsglieder für die Sensorsignale bieten genügend Stellplatz für die Prozessoreinheiten der Systeme.

Die Ausgangssignale dieser System-Prozessoren können an einen handelsüblichen Mikrorechner angeschlossen sein, in dem die empfangenen Bereichssignale verarbeitet und gespeichert werden. Dieser Prozessor enthält auch die Programme, die erforderlich sind, um die Systemauswahl zu treffen und nach vorgegebenen Strategien die Signale zu liefern, die in die Reaktorsteuerung zur Durchführung der jeweiligen Stabilisierungsmaßnahmen erforderlich sind. Als Verbindungsleitungen können vorteilhaft Glasfasern verwendet werden.

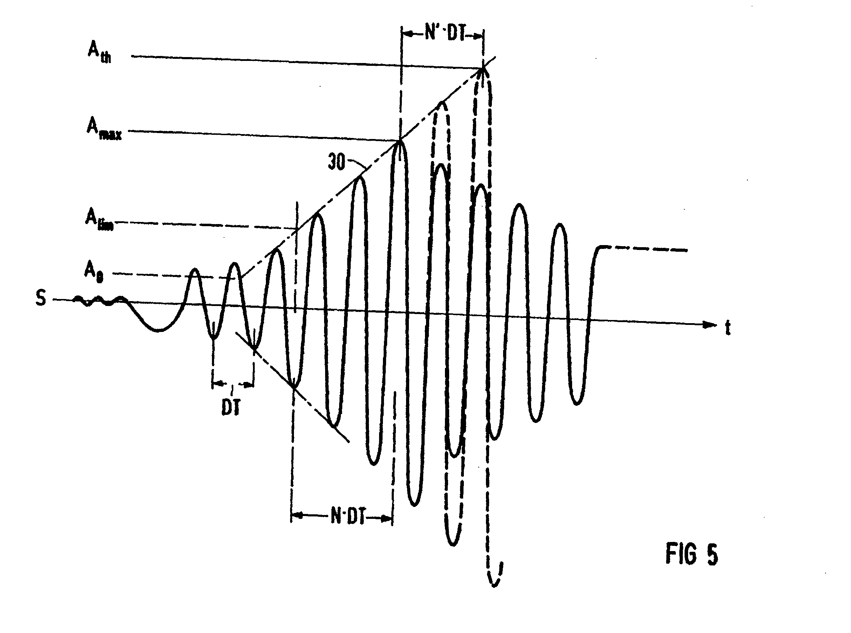

Zur Erläuterung der Stabilisierungsmaßnahmen ist in Figur 5 - ohne Berücksichtigung eines den tatsächlichen Verhältnissen entsprechenden Maßstabs - ein Verlauf des relativen Bereichsmeßwerts S angenommen, aus dessen über der Rauschgrenze Aₒ liegenden Werten die Aufklingrate DA bestimmt wird, wenn diese Oszillation einen Grenzwert Aₗᵢₘ überschreitet. Dabei ist der Extremfall angenommen, daß nach Überschreiten eines vorgegebenen Maximalwertes Aₘₐₓ der Amplituden ein totaler SCRAM eingeleitet wird, bis zu dessen ausreichender Wirksamkeit eine Anzahl N' (hier N'=2) Oszillationsperioden benötigt werden, während nur eine Anzahl N (zur Verdeutlichung ist hier N=3 angenommen, bei realen Verhältnissen ist N sehr viel größer) von Oszillationsperioden verstreichen, bis die Amplitutden es relativen Meßwerts S den Bereich zwischen Aₗᵢₘ und Aₘₐₓ durchlaufen.

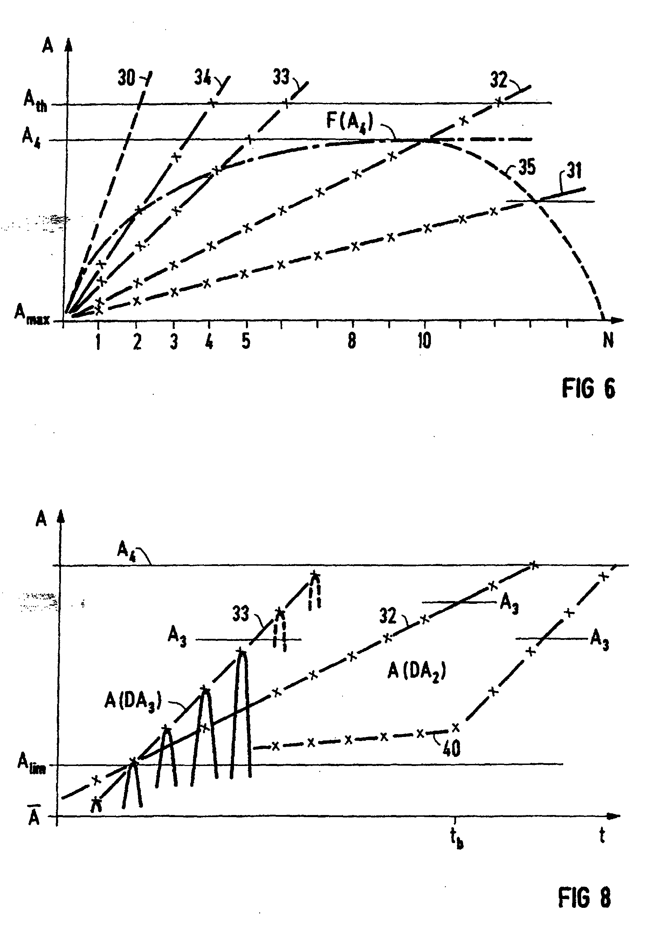

Dem in Figur 5 durch die Kurve 30 dargestellten Extremfall entspricht die Kurve 30 der Figur 6, wobei in dieser Figur 6 weitere Kurven 34, 33, 32 und 31 angegeben sind, deren Aufklingrate DA jeweils um den Faktor 1/2, 1/3, 1/4 und 1/5 geringer sind. Aus Figur 6 kann man entnehmen, daß bei diesen Aufklingraten ein SCRAM, der bei Überschreiten des Grenzwerts Aₘₐₓ ausgelöst würde, noch nicht erforderlich ist, vielmehr gestattet die für die Wirksamkeit des SCRAM erforderliche Zeit bzw. Anzahl N' der Oszillationsperioden DT, den Reaktor noch eine gewisse Anzahl N von Perioden weiter zu betreiben, die sich aus dem Schnittpunkt der Kurven 32, 33.. mit der Kurve F(A4) ergeben. Für Oszillationen, deren Amplituden beim Überschreiten des Grenzwerts Aₗᵢₘ noch schwächer anwachsen als die Kurve 32, kann angeommen werden, daß derartige schwach aufklingende transiente Übergänge von selbst abklingen, so daß in den Reaktorbetrieb voraussichtlich für eine Anzahl N der Betriebsperioden nicht eingegriffen werden muß, die sich aus dem Schnittpunkt der entsprechenden Kurven mit der Grenzkurve 35 ergibt. Ein oberer Grenzwert A4 stellt dabei sicher, daß selbst bei unverändert anwachsender Amplitude noch ein SCRAM eingeleitet werden kann, für dessen Wirksamkeit noch die Anzahl N'=2 Oszillationsperioden zur Verfügung stehen.

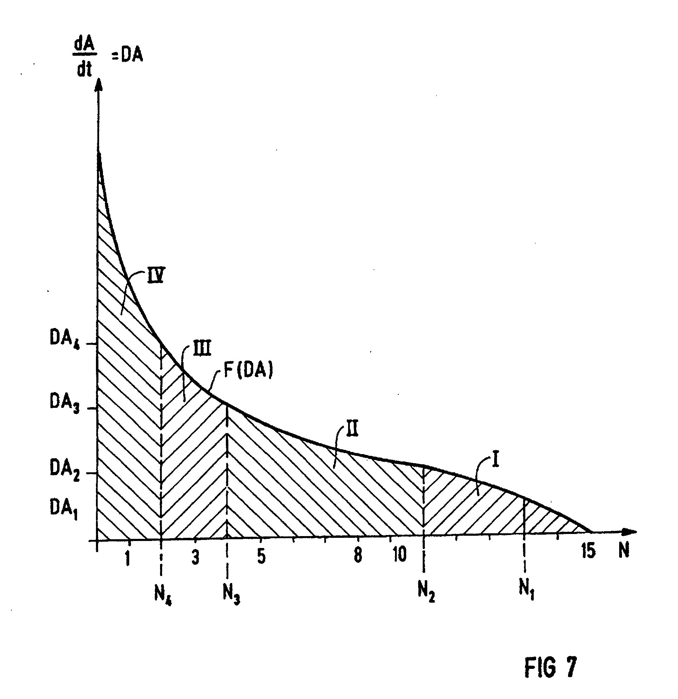

In Figur 5 ist der durch die Kurve F(A4) gegebene Zusammenhang zwischen den Aufklingraten DA und den Periodendauern N, die nach Überschreiten des Grenzwerts Aₘₐₓ noch vor Einleiten eines SCRAM zur Verfügung stehen, als entsprechende Grenzkurve F(DA) wiedergegeben. Eine derartige Kurve kann - unter Berücksichtigung einer ausreichenden Sicherheitsreserve - aus Modellrechnungen für das Verhalten des Reaktors bei transienten Zuständen und aus dem Vergleich solcher Modellrechnungen mit tatsächlich beobachteten Reaktorzuständen ermittelt und z.B. als Kennlinie in einem Speicher hinterlegt werden. Es genügt dann, beim Überschreiten des Grenzwerts Aₗᵢₘ die jeweils detektierte Aufklingrate zu benutzen, um den entsprechenden Wert N (für die Kurven 31, 32, 33, 34 also die Werte N1, N2, N3, N4) zu entnehmen. Beim Überschreiten des Amplitudenwertes Aₘₐₓ kann dann ein Zähler auf den entsprechenden Wert N gesetzt werden, der mit jedem Bestätigungssignal "confirmation" (Figur 3) heruntergezählt wird. Der Reaktorbetrieb braucht dann nicht durch einen totalen SCRAM unterbrochen zu werden, solange der Zählerstand nicht auf Null heruntergezählt ist. Auch dann braucht der totale SCRAM erst eingeleitet zu werden, wenn der Amplitudengrenzwert A4 erreicht ist. In der Regel ist aber innerhalb dieser Zeit die Oszillation von selbst bereits gedämpft und klingt wieder ab, was insbesondere dadurch sichergestellt werden kann, wenn beim Überschreiten des Grenzwertes Aₘₐₓ ein Alarmsignal gesetzt wird, das in dieser Alarmstufe lediglich verhindert, daß in der Steuerung Änderungen des Betriebszustandes vorgenommen werden, die zu einer Leistungserhöhung und damit zu einer weiteren transienten Anregung der Oszillation führen könnten. Bei dieser Variante wird also lediglich bei Überschreiten des Grenzwerts Aₘₐₓ lediglich eine Stabilisierungsstrategie verfolgt, die einer niedrig rangigen Alarmstufe entspricht und keine Unterbrechung des Reaktorbetriebes, insbesondere keinen SCRAM erfordert, solange nicht durch Überschreiten der in Figur 7 gegebenen Kurve und/oder Überschreiten der Grenzwerts A4 eine höchstrangige Alarmstufe mit einem totalen SCRAM vorliegt.

Es kann aber auch auf eine Kennlinie, die zu jedem Wert DA die entsprechende, vor einem SCRAM noch verfügbare Zeit (Periodenzahl N) ermittelt, verzichtet und statt dessen die Aufklingrate DA durch entsprechende Grenzwertmelder auf Überschreiten von bestimmten Grenzwerten überwacht wird, wie in Figur 7 durch DA1, DA2, DA3 und DA4 angegeben sind. Liegt also z.B. ein unterhalb des Grenzwerts DA1 liegende Aufklingrate vor, so kann eine entsprechende Periodenzahl N1 abgewartet werden, in der noch keinerlei Sicherheitsmaßnahmen erforderlich sind, also keine Stabilisierungsstrategie mit einem besonderen Eingriff in die Reaktorsteuerung erforderlich ist. Im Bereich zwischen den Grenzwerten DA1 und DA2 (Alarmstufe I) kann z.B. vorgesehen sein, den Raktorbetrieb für eine Anzahl N2 von Oszillationsperioden weiter laufen zu lassen, wobei es vorteilhaft sein kann, zu verhindern, daß der Reaktor auf einen Betriebszustand erhöhter Leistung gesteuert wird. In der Alarmstufe II kann die Dauer für diesen Reaktorbetrieb auf eine Anzahl N3 von Reaktorperioden begrenzt werden, wobei zur Verbesserung der Dämpfung auch vorgesehen sein kann, ein Teil der Steuerstäbe langsam in den Reaktor einzufahren, was einer Absenkung der Reaktorleistung entspricht, wie sie betriebsmäßig vorgesehen ist, wenn dem Reaktor eine niedrigere Leistung abverlangt wird. Die Grenzwerte DA3 und DA4 für die Aufklingrate bestimmen eine Alarmstufe III, in der der Reaktor noch eine Anzahl N4 von Perioden weiter laufen kann, wobei außerdem vorgesehen sein kann, hier einen Teil der Absorberstäbe schnell einzufahren (als "partial SCRAM" bezeichnet). Erst beim Überschreiten des Grenzwerts DA4 erscheint dann in einer höchstrangigen Alarmstufe ein totaler SCRAM erfordelich.

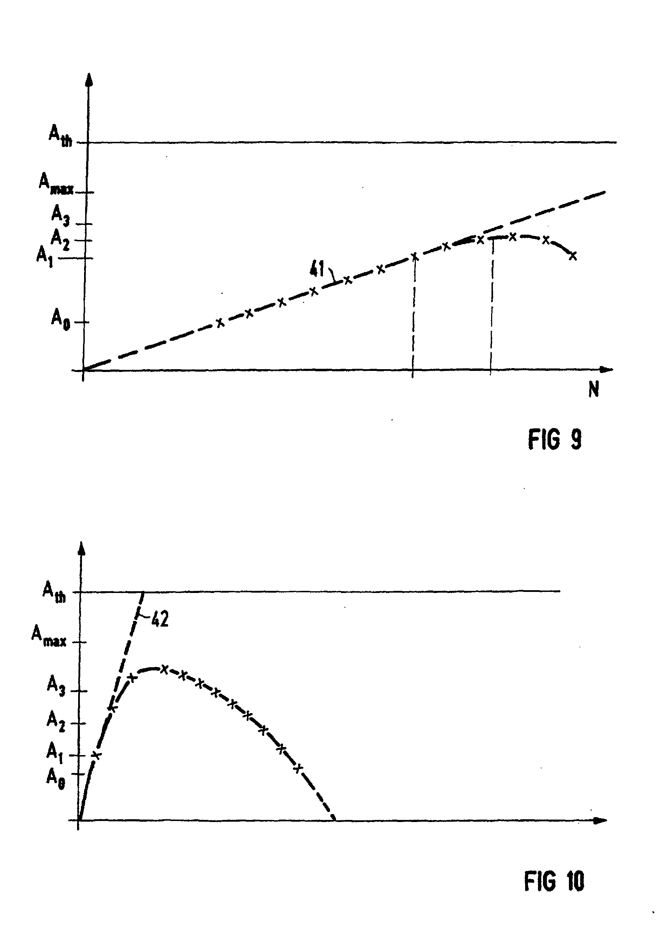

Eine weitere Variante der Erfindung wird anhand der Figuren 8 bis 10 erläutert. In Figur 8 sind dabei für die Amplituden des relativen Bereichssignals S Aufklingraten gezeigt, die den Kurven 32 und 33 der Figur 6 entsprechen. Diese Amplituden sind zu dem Zeitpunkt ermittelt, an dem sie den Grenzwert Aₗᵢₘ überschreiten. Dabei ist angenommen, daß die Alarmstufe II von der Überwachungsstufe detektiert wurde und eine Stabilisierungsstrategie eingeleitet wurde, bei der die Reaktorleistung durch langsames Einfahren der Steuerstäbe stabilisierte werden soll. Im Fall der Kurve 33 sind die unter diesen Bedingungen auftretenden Amplituden mit durchgezeichneten Linien angegeben. Die der Alarmstufe II entsprechende Stabilisierungstrategie würde - falls sie auch bei Amplitudenwerten beibehalten würde, die über einem mit A3 angegebenen Grenzwert liegen und durch unterbrochen gezeichnete Peaks dargestellt ist - dazu führen, daß mit dem Grenzwert A4 ein totaler SCRAM eingeleitet werden müßte. Ein derartiger totaler SCRAM soll aber vermieden werden. Deshalb wird bei Erreichen des Grenzwerts A3 von der im Zusammenhang mit der Alarmstufe II bei Figur 7 besprochenen Stabilisierungstrategie (langsames Einfahren von Absorberelementen) auf eine höhere Alarmstufe mit einer höherrangigen Stabilisierungstrategie übergegangen, nämlich dem erwähnten "partial SCRAM". Dadurch wird nunmehr die Oszillation stärker gedämpft, so daß die Amplituden nicht weiter aufklingen, also der Grenzwert A4 nicht erreicht und der totale SCRAM nicht eingeleitet wird.

Die Kurve 32 zeigt, daß auch in diesem Fall bei einer niedrigeren Aufklingrate der Grenzwert A3 höher gesetzt werden kann als bei höherer Aufklingrate.

Bei dieser Variante wird also nicht die Abklingrate auf Überschreiten von Grenzwerten überwacht, vielmehr wird die momentan detektierte Abklingrate dazu benutzt, einen Grenzwert für die Amplitudenwerte selbst vorzugeben. Die Abhängigkeit des Grenzwertes von der Abklingrate kann dagegen wiederum nach einer Eichkurve, ähnlich Figur 7, ermittelt werden, oder es kann auch durch eine entsprechende Aufteilung des für die Aufklingrate zur Verfügung stehenden Bereichs in einzelne Alarmstufen der entsprechende Grenzwert A3 stufenweise verändert werden.

Diese Variante hat den Vorteil, daß Änderungen in der Abklingrate, die während des Reaktorbetriebes auch nach Überschreiten des Grenzwertes Aₗᵢₘ auftreten, besonders berücksichtigt werden. Dies zeigt die Kurve 40 der Figur 8, bei der zunächst angenommen ist, daß die Oszillation beim Überschreiten des Grenzwertes Aₗᵢₘ so schwach anwächst, daß ein Eingreifen in die Reaktorsteuerung nicht erforderlich ist. Es ist aber angenommen, daß das Bedienungspersonal zum Zeitpunkt t_{b} über die betriebsmäßige Reaktorsteuerung eine Erhöhung der Leistung vorgenommen hat, durch die die transient angeregte Oszillation erheblich verstärkt wird. Dies führt dazu, daß die Amplitude A, deren Aufklingrate beim Überschreiten von Aₗᵢₘ zunächst gering war und keinen Alarm ausgelöst hat, nunmehr den Wert der Kurve 33 annimmt, so daß jetzt die Amplitude A auf Überschreiten des Grenzwerts A3 überwacht wird und in diesem Fall die gleiche, der Alarmstufe III entsprechende Stabilisierungstrategie ("partial SCRAM") einleitet. Dadurch wird die aufklingende Oszillation stärker gedämpft, so daß auch in diesem Fall der Grenzwert A4 praktisch nicht mehr erreicht wird, also kein totaler SCRAM erforderlich wird.

Analog zum Grenzwert A3 für die Amplitude A, der zur Einleitung des partial SCRAM führt, kann natürlich auf für die niedriger rangigen Stabilisierungstrategien (Blockieren einer Leistungserhöhung, Alarmstufe I; bzw. langsames Einführen zusätzlicher Absorberelemente, Alarmstufe II) ein entsprechender Grenzwert A1 und A2 eingeführt werden.

Dies ist in Figur 9 anhand einer mit relativ niedriger Aufklingrate aufklingenden Oszillation gezeigt. Dabei liegen die Extremwerte (Amplituden) der Oszillation auf einer Kurve 41 und werden auf Überschreiten der Grenzwerte A1, A2, A3 überwacht, die entsprechend der bei dieser Aufklingrate zur Verfügung stehenden, hohen Anzahl N von Oszillationsperioden relativ nahe an dem Grenzwert Aₜₕ bzw. Aₘₐₓ liegen. Mit Überschreiten des Grenzwerts A1 wird die erste Alarmstufe gesetzt, deren Stabilisierungstrategie lediglich das Blockieren einer Leistungserhöhung vorsieht. Dadurch wird zwar die Aufklingrate erniedrigt, aber die Oszillation noch nicht ausreichend gedämpft. Beim Überschreiten des Grenzwerts A2 jedoch wird die Leistung des Reaktors erniedrigt und die Oszillation derart gedämpft, daß ein weiteres Anwachsen auf die Grenzwerte A3, Amax und Ath bereits nicht mehr auftritt.

Der in Figur 10 gezeigten Kurve 42 liegt eine verhältnismäßig hohe Aufklingrate DA zugrunde, weshalb die Grenzwerte A1, A2 und A3 in diesem Fall - in Abhängigkeit von der dedektierten Aufklingrate DA - niedriger gelegt sind als in Figur 9. Deshalb wird die Alarmstufe II (Grenzwert A2) bereits relativ frühzeitig erreicht und auch der durch Überschreiten des Grenzwerts A3 in der Alarmstufe III vorgesehene "partial SCRAM" wird früher vorgenommen. Dies führt zu der gewünschten Dämpfung der Oszillation und verhindert, daß der Grenzwert Aₘₐₓ überschritten wird. Dadurch ist eine Totalabschaltung selbst in diesem ungünstigen Fall verhindert.

Das Rücksetzen der jeweiligen Alarmstufen kann z.B. erfolgen, wenn die Amplitude den Grenzwert Aₗᵢₘ wieder unterschreitet.

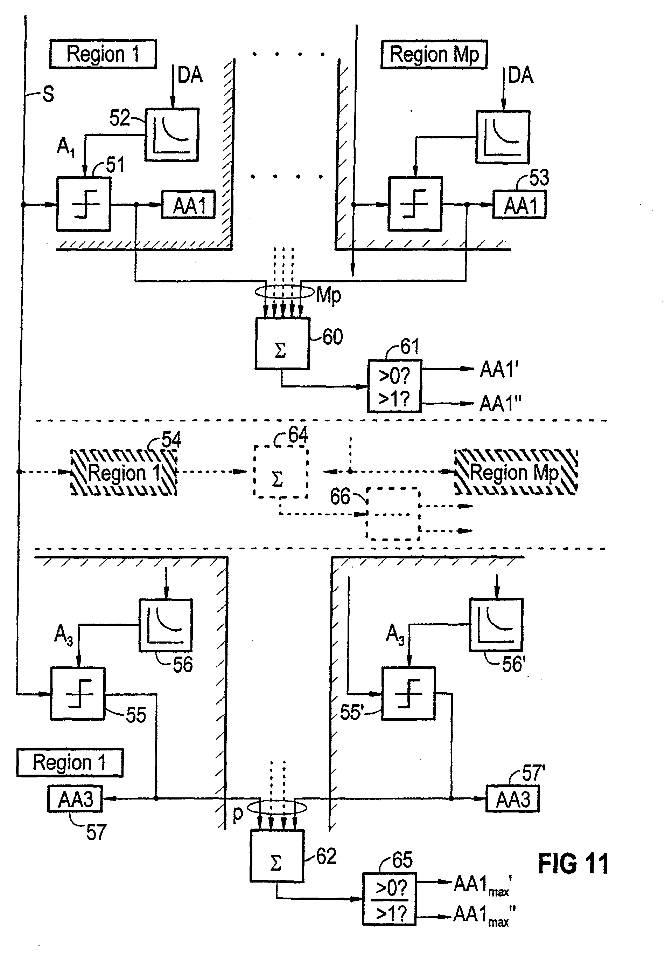

Figur 11 zeigt eine Ausführungsform für die Überwachungen in den Befehlskanälen des Systems 1, die Bereichsauswahlstufe für die Alarmsignale, die in dem Bereichssignal durch diese Überwachung gesetzt werden, und die Überwachungseinrichtung im entsprechenden Systemkanal.

Dabei ist in den jeweils mit "Region 1" bezeichneten Feldern die Bereichsüberwachung im ersten Bereich des Kanals 1 dargestellt, wobei das diesem ersten Bereich zugeordnete Bereichssignal entsprechend dem Grenzwert A1 einem Grenzwertmelder zugeleitet wird, der ein logisches Alarmsignal "1"' setzt, wenn das Bereichssignal S den Grenzwert A1 überschreitet.

Dieser Grenzwert ist einem Speicher 52 für eine Kennlinie entnommen. Nach der eingespeicherten Kennlinie entspricht dieser Grenzwert A1 dem im Bereichskanal 1 (Position 16, Figur 3) ermittelten Wert DA der aktuellen Aufklingrate. Mit dem logischen Ausgangssignal des Grenzwertmelders 51 kann einerseits eine Anzeige und/oder Speichereinheit 53 angesteuert werden, die nun für das Überwachunssignal AA1, das der ersten Alarmstufe und dem ersten Bereichskanal zugeordnet ist, ein der ersten Alarmstufe zugeordnetes Alarm-Bereichssignal AA1 bildet. In ähnlicher Weise wird das relative Bereichssignal S in einer (nicht näher dargestellten) Auswerteeinheit 54 hinsichtlich des Grenzwertes A2 und einer den Grenzwertmelder 55, den Kennlinienspeicher 56 und die Anzeige- und/oder Speichereinheit 57 enthaltenden Überwachungsstufe hinsichtlich des Grenzwert A3 und der Alarmstufe III vorgenommen. Nicht dargestellt ist, daß das Signal S mittels eines weiteren Grenzwertmelders auf Überschreiten eines fest vorgegebenen Grenzwerts A4 überwacht werden kann.

Die entsprechenden Glieder sind in jedem Bereichssignal des Systems vorhanden und auch für den letzten Bereich "Region Mp" im rechten Teil der Figur 11 mit den Bezugszeichen 51', 52'... 57' dargestellt.

Die von den Grenzwertmeldern 51, 51' in den einzelnen Bereichskanälen gebildeten Überwachungssignale (im Fall Mp=7 also ein 7-Bit-Signal) können in einem Summierglied 60 summiert werden. Dieses Signal gibt somit an, in wievielen Bereichskanälen der entsprechende Grenzwertmelder 51 ein Alarmsignal der Stufe I gesetzt hat. Ist diese Anzahl größer oder gleich einer vorgegebenen Anzahl Nmp, so setzt eine entsprechende Abfrageeinheit 61 ein entsprechendes Alarm-Systemsignal. In diesem Fall nimmt die Abfrageeinheit 61 diese Abfrage zweimal vor, wobei für ein erstes Alarm-Systemsignal AA1' die Mindestanzahl Nmp zu 1 gesetzt wird. Dieses Signal AA1' kann dann benutzt werden, um über eine entsprechende Systemauswahl (im einfachsten Fall ein - nicht dargestelltes - Summierglied für alle Signale AA1' aus allen redundant arbeitenden Systemkanälen) anzuzeigen, ob und wieviele Systeme die Alarmstufe I erzeugen.

Außerdem wird in dieser Systemüberwachung 61 auch Nmp=2 gesetzt, also ein entsprechendes Signal AA1'' ausgegeben, wenn wenigstens zwei Bereiche den Alarm der Stufe I melden. Dieses Signal kann in der Systemauswahl dazu dienen, um aus allen Alarmsignalen, die in den redundant arbeitenden Systemen erzeugt sind, ein Alarmendsignal zu bilden, das in die Steuerung des Reaktors eingreifen kann und dort eine betriebsmäßige Erhöhung der Reaktorleistung blockiert. Im einfachsten Fall genügt es, wenn die Systemauswahl nur eine "1 aus 4" Auswahl bildet, also die entsprechenden Signale AA1'' der vier Systeme durch ein "ODER"-Glied vereint. Um jedoch unnötige Störungen des Reaktorbetriebs, die durch eine Fehlverarbeitung in einer der Systeme erzeugt werden könnte, zuverlässig zu vermeiden, wird vorteilhaft für den Eingriff in den Reaktorbetrieb eine Mindestzahl Np für die Systemsignale vorgegeben, in denen die Alarmstufe I gesetzt ist. Dies kann auf einfache Weise geschehen, in dem die logischen Signale AA1'' der Systeme addiert werden und den Eingriff in die Reaktorsteuerung nur erzeugen, wenn die Summe größer oder gleich 2 ist.

In ähnlicher Weise könne über die Summierglieder 62, 64 die den Alarmstufen II und III zugeordneten Überwachungssignale der einzelnen Bereiche des Systems zu entsprechenden Signalen verarbeitet werden, die in den Abfrageeinheiten 65, 66 zur Erzeugung der diesen Stufen zugeordneten Alarm-Systemsignalen AA3' und AA3'' liefern. Die aus den Alarmsignalen AA2'' der vier Systemsignale werden auf die gleiche Weise, die anlässlich der Signale AA1'' beschrieben wurde, weiterverarbeitet (nicht dargestellt) und bilden ein dieser Alarmstufe II zugeordnetes Alarm-Endsignal, das derart in den Reaktorbetrieb eingreift, daß nicht nur ein Hochfahren der Reaktorleistung blockiert, sondern sogar die Reaktorleistung nach den Programmen, die für den normalen Reaktorbetrieb vorgesehen sind, heruntergefahren wird.

Auf die gleiche Weise, wie bei den Signalen AA1'' der ersten Alarmstufe beschrieben wurde, werden auch die der Alarmstufe III zugeordneten Alarmsignale AA3'' weiterverarbeitet und bilden ein dieser Alarmstufe III zugeordnetes Alarmendsignal, das nach der dieser Alarmstufe zugeordneten Stabilisierungstrategie einen "partial SCRAM" auslöst.

Schließlich sei noch erwähnt, daß die mittels des fest eingestellten Grenzwertes A4 gebildeten Alarmsignale auf die gleiche Weise weiterverarbeitet werden, um notfalls einen der höchsten Alarmstufe entsprechenden totalen SCRAM auszulösen.

Die Erfindung stellt also einerseits sicher, daß der instabile Zustand des Reaktors mit ausreichender Redundanz überwacht wird, um bei Ausfall von einzelnen Sensoren, Meßlanzen oder Rechengliedern eine zuverlässige Aussage über den instabilen Zustand machen zu können, andererseits wird auch erreicht, daß zur Dämpfung der Instabilität nur in einem geringen Maße in den Reaktorbetrieb eingegriffen wird. Ein totaler SCRAM ist dabei nach allen Erfahrungen und Abschätzungen praktisch ausgeschlossen, so daß auf die vierte Alarmstufe, deren Strategie einen totalen SCRAM vorsieht, als vollkommen überflüssig angesehen werden kann. Die zur Überwachung des Grenzwertes Aₘₐₓ vorgesehenen Bauglieder und die Übertragungsglieder für ein dieser höchsten Alarmstufe zugeordneten Alarmsignals sind daher nur als Option beschrieben, auf die auch verzichtet werden kann.

## Patentansprüche

1. Verfahren zum Betreiben eines durch Oszillation einer intern auftretenden physikalischen Größe instabilen Reaktors, der durch betriebsabhängig eingegebene Parameter gesteuert und von einer Überwachungseinrichtung überwacht wird, die die physikalische Größe in mindestens drei aufeinanderfolgenden Halbperioden der Oszillation mißt und den Reaktorbetrieb nicht unterbricht, solange keine Abschaltung des Reaktors erforderlich ist,
**dadurch gekennzeichnet, daß** ein Meßwert für die Aufklingrate der Oszillation gebildet wird, der Reaktor mindestens eine weitere Halbperiode mit den eingegebenen Parametern weiter gesteuert wird und die Überwachungseinrichtung in Abhängigkeit von diesem Meßwert entscheidet, ob zur Dämpfung der Instabilität eine Stabilisierungsstrategie eingeleitet wird, bei der der Reaktor mit von der Überwachungseinrichtung selbsttätig geänderten Parametern weiter gesteuert wird.

2. Verfahren nach Anspruch 1,
**dadurch gekennzeichnet, daß** nach Überschreiten einer Rauschgrenze (Aₒ) für die Extremwerte (Aₙ) der Meßwert für die Aufklingrate gebildet wird und daß erst beim Überschreiten eines weiteren Grenzwertes (A1) für die Extremwerte die Entscheidung getroffen wird, ob in die betriebsmäßige Steuerung des Reaktors eingegriffen wird.

3. Verfahren nach Anspruch 1 oder 2,
**dadurch gekennzeichnet, daß** eine in die betriebsmäßige Steuerung des Reaktors eingreifende Stabilisierungsstrategie eingeleitet wird, wenn die Extremwerte (Aₙ) der oszillierenden Größe einen in Abhängigkeit vom Meßwert (DA) der Aufklingrate vorgegebenen Schwellwert (A2) überschreiten.

4. Verfahren nach Anspruch 1 oder 2,
**dadurch gekennzeichnet, daß** ein Schwellwert (DA1) für die Aufklingrate (DA) vorgegeben wird und die Stabilisierungsstrategie eingeleitet wird, wenn die Aufklingrate (DA) diesen Schwellwert (DA1) überschreitet.

5. Verfahren nach Anspruch 1 oder 2,
**dadurch gekennzeichnet, daß** eine von der Aufklingrate abhängige Anzahl (N) von Oszillationsperioden vorgegeben wird und entsprechend der Stabilisierungsstrategie in die Steuerung des Reaktors eingegriffen wird, wenn die Oszillation der physikalischen Größe über die Dauer dieser Oszillationsperioden anhält.

6. Verfahren nach einem der Ansprüche 1 bis 5,
**dadurch gekennzeichnet, daß** die einzuleitende Stabilisierungsstrategie in Abhängigkeit von der Aufklingrate (DA) unter einer Anzahl von vorgegebenen Stabilisierungsstrategien ausgewählt wird.

7. Verfahren nach Anspruch 6,
**dadurch gekennzeichnet, daß** als Stabilisierungsstrategie in einer niedrigrangigen Alarmstufe derart in die Steuerung des Reaktors eingegriffen wird, daß eine Erhöhung der Leistung durch Entfernen von Absorberelementen aus dem Reaktorkern blockiert wird.

8. Verfahren nach Anspruch 6 oder 7,
**dadurch gekennzeichnet, daß** als Stabilisierungsstrategie in einer ersten höherrangigen Alarmstufe derart in die Reaktorsteuerung eingegriffen wird, daß die Leistung betriebsmäßig durch langsames Einfahren von Absorberelementen in den Reaktorkern reduziert wird.

9. Verfahren nach einem der Ansprüche 6 bis 8,
**dadurch gekennzeichnet, daß** als Stabilisierungsstrategie in einer zweiten höherrangigen Alarmstufe mehrere Steuerstäbe rasch in den Reaktorkern eingefahren werden.

10. Verfahren nach einem der Ansprüche 6 bis 9,
**dadurch gekennzeichnet, daß** als Stabilisierungsstrategie in einer höchstrangigen Alarmstufe die Leistung des Reaktors möglichst rasch auf Null heruntergefahren wird.

11. Verfahren nach einem der Ansprüche 1 bis 10,
**dadurch gekennzeichnet, daß** mehrere über den Reaktorkern verteilte Bereiche zu einem System zusammengefaßt werden und in jedem Bereich des Systems jeweils ein lokaler Meßwert (S) für die der physikalische Größe und ein Meßwert (DA) für die Aufklingrate dieser Größe gebildet und anhand dieser Meßwerte für jeden Bereich eine Vorentscheidung getroffen wird, ob die Stabilisierungsstrategie eingeleitet werden soll, und daß die Stabilisierungsstrategie erst dann eingeleitet wird, wenn dies in wenigstens einer vorgegebenen Mindestzahl der Vorentscheidungen entschieden worden ist.

12. Verfahren nach Anspruch 11,
**dadurch gekennzeichnet, daß** die Entscheidung redundant für mehrere unterschiedliche Systeme aus über den Kern verteilten Bereichen getroffen und blockiert wird, solange nicht in einer vorgegebenen Mindestzahl (Np) von Systemen zugunsten der Stabilisierungsstrategie entschieden worden ist.

13. Verfahren nach Anspruch 12,
**dadurch gekennzeichnet, daß** die Bereiche den Systeme derart zugeordnet sind, daß benachbarte Bereiche zu unterschiedlichen Systemen und jeder Bereich nur zu einem einzigen System gehört.

14. Verfahren nach einem der Ansprüche 11 bis 13,
**dadurch gekennzeichnet, daß** in jedem Bereich mehrere Sensoren zur Bildung der Meßwerte verwendet werden und daß in jedem Bereich nur eine vorgegebene Mindestzahl dieser Sensoren zur Bildung der Entscheidung herangezogen werden.

15. Verfahren zum Betreiben eines durch lokale Oszillation einer physikalischen Größe instabilen Siedewasser-Reaktors, der durch betriebsabhängig eingegebene Parameter gesteuert und von einer Überwachungseinrichtung überwacht wird, die in mindestens drei aufeinanderfolgende Halbperioden der Oszillation durch Messung der physikalischen Größe in mehreren Bereichen des Reaktorkerns den jeweiligen Bereichen zugeordnete lokale Meßwerte bildet und nach Überschreitung einer vorgegebenen Rauschgrenze dieser Meßwerte den Reaktor mit den vorgegebenen Parametern weiter betreibt, solange keine Abschaltung des Reaktors erforderlich wird,
**dadurch gekennzeichnet, daß** die Überwachungseinrichtung nach mindestens einem Überwachungskriterium unter einer Hierarchie von Alarmstufen als aktuelle Alarmstufe die höchste Alarmstufe auswählt, deren Überwachungskriterium von den Meßwerten einer vorgegebenen Mindestzahl der Bereiche erfüllt ist, und
frühestens zu einem mehrere Oszillationsperioden nach dem Überschreiten der Rauschgrenze liegenden Zeitpunkt selbsttätig eine Stabilisierungsstrategie einleitet, wobei
i) eine niedrigrangige Alarmstufe (I) als Stabilisierungsstrategie einen Eingriff in die Reaktorsteuerung vorsieht, bei dem ein Entfernen von Absorberelementen aus dem Reaktorkern, das einer betriebsmäßigen Steigerung der Reaktorleistung entspricht, blockiert wird, und
ii) wenigstens eine höherrangige Alarmstufe (II) als Stabilisierungsstrategie einen Eingriff in die Reaktorsteuerung vorsieht, bei dem mehrere Absorberelemente im Sinn einer betriebsmäßigen Reduzierung der Reaktorleistung in dem Kern eingebracht werden.

16. Verfahren nach Anspruch 15,
**dadurch gekennzeichnet, daß** als Stabilisierungsstrategie in einer ersten höherrangigen Alarmstufe die mehreren Steuerstäben entsprechend einer betriebsmäßigen Reduzierung der Leistung langsam eingefahren werden, und in einer zweiten höherrangigen Alarmstufe (III) mehrere Absorberelemente rasch eingefahren werden.

17. Verfahren nach Anspruch 15 oder 16,
**dadurch gekennzeichnet, daß** als Stabilisierungsstrategie in einer höchstrangigen Alarmstufe (IV) die Leistung des Reaktors im Sinne einer Reaktorschnellabschaltung (SCRAM) möglichst rasch auf Null reduziert wird.

18. Verfahren nach einem der Ansprüche 15 bis 17,
**dadurch gekennzeichnet, daß** durch das Überwachungskriterium ein Zeitpunkt oder zumindest die Parameter für die Bestimmung dieses Zeitpunkts festgelegt wird, zu dem der Reaktor vor dem Einleiten einer der aktuellen Alarmstufe entsprechenden Stabilisierungsstrategie normal weiterbetrieben wird.

19. Verfahren nach einem der Ansprüche 15 bis 18,
**dadurch gekennzeichnet, daß** bei über der Rauschgrenze liegenden Amplitudenwerten (Aₙ) das Überwachungskriterium nur solange wirksam wird, wie die detektierten Amplitudenwerte einer in einem vorgegebenen kritischen Frequenzband liegenden Frequenz entsprechen.

20. Verfahren nach Anspruch 19,
**dadurch gekennzeichnet, daß** als kritisches Frequenzband 0,3 bis 0,7 Hz vorgegeben wird.

21. Verfahren nach Anspruch 19 oder 20,
**dadurch gekennzeichnet, daß** die lokalen Meßwerte (A₍ₜ₎) mit einer Abtastfrequenz über etwa 20 Hz, vorteilhaft etwa 50 Hz, auf das Auftreten der Amplitudenwerte (Aₙ) und die Erfüllung der Überwachungskriterien hin analysiert werden.

22. Verfahren nach einem der Ansprüche 19 bis 21,
**dadurch gekennzeichnet, daß** aus den lokalen Meßwerten die Aufklingrate (DA) der Amplituden bestimmt wird und die Überwachungskriterien von der detektierten Aufklingrate (DA) abhängen.

23. Verfahren nach Anspruch 22,
**dadurch gekennzeichnet, daß** für jede Alarmstufe aus der Aufklingrate (DA) ein Schwellwert (A1, A2, A3) für die detektierten Amplitudenwerten bestimmt wird und die der aktuellen Alarmstufe entsprechende Stabilisierungsstrategie erst eingeleitet wird, wenn dieser Schwellwert überschritten ist.

24. Verfahren nach Anspruch 22,
**dadurch gekennzeichnet, daß** für jede Alarmstufe ein Schwellwert (DA2) für die aus den detektierten Amplituden bestimmte Aufklingrate (DA) bestimmt wird und die der aktuellen Alarmstufe entsprechenden Stabilisierungsstrategie in Abhängigkeit vom Überschreiten dieses Schwellwerts ausgewählt und eingeleitet wird.

25. Verfahren nach einem der Ansprüche 15 bis 24,
**dadurch gekennzeichnet,**
**dass** in der Überwachungseinrichtung mehrere Systeme redundant arbeiten, wobei jedes System die lokalen Messwerte mehrerer über den ganzen Reaktorkern verteilten Bereiche erfasst und eine dem jeweiligen Bereich zugeordnete aktuelle Alarmstufe bildet; dass unter den aktuellen Alarmstufen der einzelnen Systeme eine Alarmstufe ausgewählt wird, und dass die zur ausgewählten Alarmstufe gehörende Stabilisierungsstrategie eingeleitet wird.

26. Verfahren nach einem der Ansprüche 15 bis 25,
**dadurch gekennzeichnet, daß** jeder lokale Meßwert (S) daraufhin untersucht wird, ob er in äquidistanden Zeitabständen einen Extremwert annimmt, und daß dieser lokale Meßwert (S) zur Auswahl der aktuellen Alarmstufe nur herangezogen wird, solange er eine äquidistande Folge dieser Extremwerte aufweist.

27. Verfahren zum Überwachen der Stabilität eines Reaktorkerns in einem Siedewasserreaktor gegenüber einer destabilisierenden lokalen Oszillation einer physikalischen Größe, mit folgenden Merkmalen:
a) in mehreren Bereichen (2', 2'') des Reaktorkerns (I) sind jeweils mehrere Sensoren (4a, 4b, 4c, 4d) zur Messung der physikalischen Größe angeordnet, die Ausgangssignale dieser Sensoren sind zu einer Anzahl Mp von Bereichskanälen zusammengefaßt und jedem Bereichskanal (4 bis 19) sind jeweils ein Bereich (2'') und darin angeordnete Sensoren (4a ... 4d) zum Erzeugen eines Bereichssignals (S, Aₙ, Tₙ, DA) zugeordnet,
b) die Bereichskanäle sind zu einer Anzahl P von Systemkanälen (20, 20') zusammengefaßt, indem sie ein Systemsignal erzeugen, und
c) die Systemsignale sind einem Endkanal (24) zugeordnet, indem sie ein Endsignal ("Alarm") erzeugen, wobei
d) in jedem Endsignal wird mittels Überwachungsstufen und Auswahlstufen ein Alarmendsignal gesetzt und mittels des Endsignals ist eine Stabilisierungsstrategie in einem Verfahren nach einem der Ansprüche 1 bis 26 einleitbar, sobald mindestens in einer vorgegebenen Anzahl Np der Systemkanäle jeweils überprüft ist, ob in einer Mindestanzahl Nmp des jeweiligen Systemkanals (p) über mehrere Oszillationsperioden hinweg ein Überwachungskriterium erfüllt ist,
e) das Ausgangssignal jedes Sensors (4a, 4b, 4c, 4d) höchstens ein einziges Bereichssignal und jedes Bereichssignal höchstens ein einziges Systemsignal beeinflußt, und
f) die Bereichssignale eines Systemkanals jeweils aus den Ausgangssignalen von Sensoren gebildet werden, die in über den Querschnitt (1) des Reaktorkerns derart verteilten Bereichen liegen, daß die jeweils einem solchen Bereich benachbarten Bereiche Sensoren - vorzugsweise nur solche Sensoren - enthalten, deren Ausgangssignale Bereichskanälen anderer Systemkanäle zugeordnet sind.

28. Vorrichtung zum Überwachen der Stabilität eines Siedewasser-Reaktors gegenüber einer destabilisierenden lokalen Oszillation einer physikalischen Größe des Kerns (1), enthaltend eine Systemauswahlstufe (24), eine Anzahl P von Bereichsauswahlstufen (20, 20') für jede Bereichsauswahlstufe eine Anzahl Mp von Bereichsüberwachungsstufen und für jede Bereichsüberwachungsstufe
(4, ... 19) eine Sensorstufe (4, 11) mit mehreren innerhalb eines Bereichs des Kerns angeordneten, dieser Bereichsüberwachungsstufe zugeordneten Sensoren (4a, 4b, 4c, 4d) mit folgenden Merkmalen:
a) die jeweils einer Bereichsüberwachungsstufe (4a, ... 19) zugeordneten Sensoren (4a, 4b, 4c, 4d) liefern zu einem Bereichssignal (S) zusammengefaßte Meßsignale für die physikalische Größe, jedes Bereichssignal (S) wird in der den Sensoren zugeordneten Bereichsüberwachungsstufe (17) nach einem Überwachungskriterium überwacht und jede Bereichsüberwachungsstufe liefert ein ein Bereichsüberwachungssignal enthaltendes Bereichssignal,
b) jedes Bereichssignal ist mindestens einer der Bereichsauswahlstufen (20, 20') aufgeschaltet, die aus einer vorgegebenen Mindestzahl (Nmp) von Bereichsüberwachungssignalen ein Systemüberwachungssignal bildet, und
c) jedes Systemüberwachungssignal ist der System-Auswahlstufe (24) zugeführt, die mittels einer vorgegebenen Mindestzahl von Systemen (Np = 2) ein Endüberwachungssignal liefert, mit dem eine Stabilisierungsstrategie in einem Verfahren nach einem der Ansprüche 1 bis 26 einleitbar ist.

29. Vorrichtung zum Überwachen der Stabilität eines Reaktorkerns in einem Siedewasser-Reaktor gegenüber einer destabilisierenden lokalen Oszillation einer physikalischen Größe, mit folgenden Merkmalen:
a) in mehreren Bereichen (2', 2'') des Reaktorkerns (1) sind jeweils mehrere Sensoren (4a, ... 4d) zur Messung der physikalischen Größe angeordnet und die Ausgangssignale mehrerer Sensoren eines Bereichs (2', 2'') sind jeweils zu einem zugeordneten Bereichssignal (S) zusammengefaßt.
b) jedem Bereichssignal ist eine Auswertestufe (12) zugeordnet, die im Bereichssignal das Auftreten von Extremwerten (Aₙ) der physikalischen Größe identifiziert und bei einer Oszillation konstanter Frequenz die Aufklingrate (DA) der Extremwerte in diesem Bereich ermittelt,
c) den Auswertestufen (12) ist mindestens eine Überwachungsstufe (17, 23) zugeordnet, die ein Alarmsignal setzt, sobald mindestens in einer vorgegebenen Anzahl (Nmp = 2) von Bereichen die Extremwerte ein von der ermittelten Aufklingrate (DA) abhängiges lokales Überwachungskriterium erfüllen, und
d) mittels des Alarmsignals ist eine Stabilisierungsstrategie in einem Verfahren nach einem der Ansprüche 1 bis 26 einleitbar.

30. Vorrichtung nach Anspruch 29,
**dadurch gekennzeichnet, daß** die Überwachungsstufe (51) anspricht, wenn die Extremwerte der physikalischen Größe einen in Abhängigkeit von der ermittelten Aufklingrate vorgegebenen Grenzwert (A1) erfüllen.

31. Vorrichtung nach Anspruch 30,
**dadurch gekennzeichnet, daß** die Überwachungsstufe mehrere von der ermittelten Aufklingrate (DA) abhängige Grenzwerte (A1, A2, A3) bilden und das gesetzte Alarmsignal anzeigt, welcher der Grenzwerte von den identifizierten Extremwerten überschritten wird.

32. Vorrichtung zum Überwachen der Stabilität eines Reaktorkerns in einem Siedewasser-Reaktor gegenüber einer destabilisierenden lokalen Oszillation einer physikalischen Größe, mit folgenden Merkmalen:
a) in mehreren Bereichen (2', 2'') des Reaktorkerns (1) sind jeweils mehrere Sensoren (4a, 4b, 4c, 4d) zur Messung der physikalischen Größe angeordnet und die Ausgangssignale mehrerer Sensoren eines Bereichs sind zu einem zugeordneten Bereichssignal (S) zusammengefaßt,
b) jedem Bereichssignal ist eine Auswertestufe (12) zugeordnet, die im Bereichssignal (S) das Auftreten einer Oszillation konstanter Frequenz identifiziert,
c) den den verschiedenen Bereichssignalen zugeordneten Auswertestufen sind Mittel (17) zur Überwachung zugeordnet, die aus einer Hierarchie von Alarmstufen (I, II, III, IV) nach vorgegebenen Überwachungskriterien (Grenzwerte A1, A2, A3, A4) für die in mindestens einer vorgegebenen Anzahl (Nmp = 2) von Bereichen identifizierten Oszillationen eine Alarmstufe auswählen und entsprechend der ausgewählten Alarmstufe einen Zeitpunkt festlegen, bei dem ein Notbefehl ("Alarm") zum Einleiten einer der Alarmstufe entsprechenden Stabilisierungsstrategie bei einem Verfahren nach einem der Ansprüche 1 bis 26 abgegeben wird.

## Claims

1. Method of operating a reactor which is unstable as a result of oscillation of an internally occurring physical variable and which is controlled by means of parameters entered as a function of operation and is monitored by a monitoring device, which measures the physical variable in at least three successive half-periods of the oscillation and does not interrupt the reactor operation as long as no shut-down of the reactor is required, **characterized in that** a measured value for the decay rate of the oscillation is formed, the reactor continues to be controlled with the entered parameters for at least one further half-period and the monitoring, device decides, as a function of this measured value, whether, in order to damp the instability, a stabilization strategy is initiated, in which the reactor continues to be controlled with parameters changed automatically. by the monitoring device.

2. Method according to Claim 1, **characterized in that**, after a noise limit (Ao) for the extreme values (An) has been exceeded, the measured value for the rate of increase is formed, and **in that** only after a further limit value (A1) for the extreme values has been exceeded is the decision taken as to whether an intervention is made in the operational control of the reactor.

3. Method according to Claim 1 or 2, **characterized in that** a stabilization strategy which intervenes in the operational control of the reactor is initiated if the extreme values (An) of the oscillating variable exceed a threshold value (A2) which is predefined as a function of the measured value (DA) of the rate of increase.

4. Method according to Claim 1 or 2, **characterized in that** a threshold value (DA1) for the rate of increase (DA) is predefined, and the stabilization strategy is initiated if the rate of increase (DA) exceeds this threshold value (DA1).

5. Method according to Claim 1 or 2, **characterized in that** a number (N) of oscillation periods is predefined, the number depending on the rate of increase, and intervention is made in the control of the reactor, in accordance with the stabilization strategy, if the oscillation of the physical variable persists over the duration of these oscillation periods.

6. Method according to one of Claims 1 to 5,
**characterized in that** the stabilization strategy to be initiated is selected from among a number of predefined stabilization strategies, depending on the rate of increase (DA).

7. Method according to Claim 6, **characterized in that**, as the stabilization strategy in a low-ranking alarm stage, an intervention is made in the control of the reactor in such a way that an increase in power by removing absorber elements from the reactor core is blocked.

8. Method according to Claim 6 or 7, **characterized in that**, as the stabilization strategy in a first higher-ranking alarm stage, an intervention is made in the control of the reactor in such a way that the power is reduced operationally by slowly moving absorber elements into the reactor core.

9. Method according to one of Claims 6 to 8, charaterized in that, as the stabilization strategy in a second higher-ranking alarm stage, a plurality of control rods are moved rapidly into the reactor core.

10. Method according to one of Claims 6 to 9, **characterized in that**, as stabilization strategy in a highest-ranking alarm stage, the power of the reactor is reduced as rapidly as possible to zero.

11. Method according to one of Claims 1 to 10, **characterized in that** a plurality of regions distributed over the reactor core are combined into a system, and in each region of the system in each case a local measured value (S) for the physical variable and a measured value (DA) for the rate of increase of this variable are formed and, using these measured values for each region, a preliminary decision is taken as to whether the stabilization strategy is to be initiated, and **in that** the stabilization strategy is initiated only when this has been decided in at least a predefined minimum number of preliminary decisions.

12. Method according to Claim 11, **characterized in that** the decision is taken redundantly for a plurality of different systems made up of regions distributed over the core, and is blocked as long as a decision in favour of the stabilization strategy has not been taken in a predefined minimum number (Np) of systems.

13. Method according to Claim 12, **characterized in that** the regions are assigned to the systems in such a way that adjacent regions belong to different systems, and each region belongs to only one system.

14. Method according to one of Claims 11 to 13,
**characterized in that** in each region a plurality of sensors is used to form the measured values, and **in that** in each region only a predefined minimum number of these sensors is used to form the decision.

15. Method of operating a boiling-water reactor which is unstable as a result of local oscillation of a physical variable which is controlled by means of parameters entered as a function of operation and is monitored by a monitoring device, which, by measuring the physical variable in a plurality of regions of the reactor core in at least three successive half-periods of the oscillation, forms local measured values associated with the respective regions and, after a predefined noise limit of these measured values has been exceeded, continues to operate the reactor with the predefined parameters as long as no shut-down of the reactor is required, **characterized in that**, in accordance with at least one monitoring criterion, the monitoring device selects as the current alarm stage from a hierarchy of alarm stages the highest alarm stage whose monitoring criterion is fulfilled by the measured values from a predefined minimum number of regions, and
automatically initiates a stabilization strategy at the earliest at a point in time lying several oscillation periods after the noise limit has been exceeded,
i) a low-ranking alarm stage (I) providing, as stabilization strategy, an intervention in the reactor control in which a removal of absorber elements from the reactor core, which corresponds to an operational increase in the reactor power, is blocked, and
ii) at least one higher-ranking alarm stage (II) providing, as stabilization strategy, an intervention in the reactor control in which a plurality of absorber elements are introduced into the core in the sense of an operational reduction in the reactor power.

16. Method according to Claim 15, **characterized in that**, as stabilization strategy in a first higher-ranking alarm stage, the plurality of control rods are moved in slowly, corresponding to an operational reduction in the power, and in a second higher-ranking alarm stage (III) a plurality of absorber elements are moved in rapidly.

17. Method according to Claim 15 or 16, **characterized in that**, as stabilization strategy in a highest-ranking alarm stage (IV), the power of the reactor is reduced as rapidly as possible to zero in the sense of a rapid reactor shutdown (SCRAM).

18. Method according to one of Claims 15 to 17, **characterized in that**, by means of the monitoring criterion, a point in time or at least the parameters of the determination of this point in time is/are defined, until which the reactor is normally further operated before the initiation of a stabilization strategy corresponding to the current alarm stage.

19. Method according to one of Claims 15 to 18, **characterized in that**, in the event of amplitude values (An) lying above the noise limit, the monitoring criterion becomes effective only as long as the detected amplitude values correspond to a frequency lying in a predefined critical frequency band.

20. Method according to Claim 19, **characterized in that** 0.3 to 0.7 Hz is predefined as the critical frequency band.

21. Method according to Claim 19 or 20, **characterized in that** the local measured values (A(t)) are analysed at a sampling frequency above about 20 Hz, advantageously about 50 Hz, for the occurrence of the amplitude values (An) and the satisfying of the monitoring criteria.

22. Method according to one of Claims 19 to 21, **characterized in that** the rate of increase (DA) of the amplitudes is determined from the local measured values, and the monitoring criteria depend on the detected rate of increase (DA).

23. Method according to Claim 22, **characterized in that**, for each alarm stage, a threshold value (A1, A2, A3) for the detected amplitude values is determined from the rate of increase (DA), and the stabilization strategy corresponding to the current alarm stage is initiated only when this threshold value is exceeded.

24. Method according to Claim 22, **characterized in that**, for each alarm stage, a threshold value (DA2) is determined for the rate of increase (DA) determined from the detected amplitudes, and the stabilization strategy corresponding to the current alarm stage is selected and initiated as a function of exceeding this threshold value.

25. Method according to one of Claims 15 to 24, **characterized in that** a plurality of systems operate redundantly in the monitoring device, each system registering the local measured values of a plurality of regions distributed over the whole reactor core and forming a current alarm stage assigned to the respective region, **in that** one alarm stage is selected from among the current alarm stages of the individual systems, and **in that** the stabilization strategy belonging to the selected alarm stage is initiated.

26. Method according to one of Claims 15 to 25, **characterized in that** each local measured value (S) is examined as to whether it assumes an extreme value in equidistant time intervals, and **in that** this local measured value (S) is used to select the local alarm stage as long as it exhibits an equidistant series of these extreme values.

27. Method of monitoring the stability of a reactor core in a boiling-water reactor with respect to a destabilizing local oscillation of a physical variable, having the following features:
a) in each case a plurality of sensors (4a, 4b, 4c, 4d) for measuring the physical variable are arranged in a plurality of regions (2', 2'') of the reactor core (1), the output signals of these sensors are combined into a number Mp of region channels and each region channel (4 to 19) is assigned in each case a region (2'') and sensors (4a ... 4d) arranged therein for generating a region signal (S, Aₙ, Tₙ, DA),
b) the region channels are combined into a number P of system channels (20, 20'), in that they generate a system signal, and
c) the system signals are assigned to an output channel (24), in that they generate an output signal ("alarm"), wherein
d) in each output channel, an output alarm signal is set by means of monitoring stages and selection stages and, by means of the output signal, a stabilization strategy in a method according to one of Claims 1 to 26 can be initiated as soon as it has been checked in each case, at least in a predefined number Np of the system channels, whether a monitoring criterion is satisfied over a plurality of oscillation periods in a minimum number Nmp of the respective system channel (p),
e) the output signal of each sensor (4a, 4b, 4c, 4d) influences a maximum of one single region signal, and each region signal influences a maximum of one single system signal, and
f) the region signals of a system channel are in each case formed from the output signals of sensors which are located in regions distributed over the cross-section (1) of the reactor core in such a way that the regions which are in each case adjacent to such a region contain sensors - preferably only such sensors - whose output signals are assigned to region channels of other system channels.

28. Device for monitoring the stability of a boiling-water reactor with respect to a destabilizing local oscillation of a physical variable of the core (1), containing a system selection stage (24), a number (P) of region selection stages (20, 20'), for each region selection stage a number Mp of region monitoring stages and for each region monitoring stage (4, ... 19) a sensor stage (4, 11) having a plurality of sensors (4a, 4b, 4c, 4d) which are arranged inside a region of the core and are assigned to this region monitoring stage, having the following features:
a) the sensors (4a, 4b, 4c, 4d) in each case assigned to a region monitoring stage (4, ... 19) supply measured signals, combined into a region signal. (S), for the physical variable; each region signal (S) is monitored, in the region monitoring stage (17) assigned to the sensors, in accordance with a monitoring criterion, and each region monitoring stage supplies a region signal containing a region monitoring signal,
b) each region signal is connected to at least one of the region selection stages (20, 20'), which forms a system monitoring signal from a predefined minimum number (Nmp) of region monitoring signals, and
c) each system monitoring signal is fed to the system selection stage (24), which supplies an output monitoring signal by means of a predefined minimum number of systems (Np = 2), by means of which signal a stabilization strategy can be introduced in a process according to one of Claims 1 to 26.

29. Device for monitoring the stability of a reactor core in a boiling-water reactor with respect to a destabilizing local oscillation of a physical variable, having the following features:
a) arranged in a plurality of regions (2', 2") of the reactor core (1) are in each case a plurality of sensors (4a, ... 4d) for measuring the physical variable, and the output signals of a plurality of sensors of a region (2', 2") are in each case combined into an associated region signal (S),
b) each region signal is assigned an evaluation stage (12), which identifies in the region signal the occurrence of extreme values (An) of the physical variable and, given an oscillation of constant frequency, determines the rate of increase (DA) of the extreme values in this region,
c) the evaluation stages (12) are assigned at least one monitoring stage (17, 23), which sets an alarm signal as soon as the extreme values at least in a predefined number (Nmp = 2) of regions satisfy a local monitoring criterion which depends on the determined rate of increase (DA), and
d) by means of the alarm signal, a stabilization strategy in a method according to one of Claims 1 to 26 can be initiated.

30. Device according to Claim 29, **characterized in that** the monitoring stage (51) responds if the extreme values of the physical variable satisfy a limit value (A1) which is predefined as a function of the determined rate of increase.

31. Device according to Claim 30, **characterized in that** the monitoring stage forms a plurality of limit values (A1, A2, A3) as a function of the determined rate of increase (DA), and the alarm signal that is set indicates which of the limit values is exceeded by the identified extreme values.

32. Device for monitoring the stability of a reactor core in a boiling-water reactor with respect to a destabilizing local oscillation of a physical variable, having the following features:
a) arranged in a plurality of regions (2', 2") of the reactor core (1) are in each case a plurality of sensors (4a, 4b, 4c, 4d) for measuring the physical variable, and the output signals of a plurality of sensors of a region are combined into an associated region signal (S),
b) each region signal is assigned an evaluation stage (12) which identifies the occurrence of an oscillation of constant frequency in the region signal (S),
c) the evaluation stages assigned to the various region signals are assigned means (17) for monitoring, which select an alarm stage from a hierarchy of alarm stages (I, II, III, IV) in accordance with predefined monitoring criteria (limit values A1, A2, A3, A4) for the oscillations identified in at least one predefined number (Nmp = 2) of regions and, corresponding to the selected alarm stage, define a point in time at which, in a method according to one of Claims 1 to 26, an emergency instruction ("alarm") is output to initiate a stabilization strategy corresponding to the alarm stage.

## Revendications

1. Procédé pour faire fonctionner un réacteur qui est instable du fait de l'oscillation d'une grandeur physique qui se manifeste à l'intérieur, qui est commandé par des paramètres fournis d'après le fonctionnement et qui est surveillé par une unité de surveillance laquelle mesure la grandeur physique dans au moins trois demi périodes successives de l'oscillation et n'interrompt pas le fonctionnement du réacteur tant qu'aucune interruption du réacteur n'est nécessaire,
**caractérisé en ce qu'**une valeur mesurée est formée pour le taux de croissance de l'oscillation, le réacteur continue d'être commandé pendant au moins une autre demi période selon les paramètres fournis et l'unité de surveillance décide en fonction de cette valeur mesurée si pour atténuer l'instabilité il faut mettre en oeuvre une stratégie de stabilisation selon laquelle le réacteur est ensuite commandé à l'aide de paramètres automatiquement modifiés par l'unité de surveillance.

2. Procédé selon la revendication 1, **caractérisé en ce que**, après qu'une limite de bruit (AO) a été dépassée pour la valeur extrême (An), on forme la valeur mesurée pour le taux de croissance et qu'on ne décide si on doit mettre en oeuvre une commande fonctionnelle du réacteur que lorsqu'une autre valeur limite (A1 ) est dépassée pour les valeurs extrêmes.

3. Procédé selon la revendication 1 ou 2, **caractérisé en ce que** l'on met en oeuvre une stratégie de stabilisation qui intervient dans la commande fonctionnelle du réacteur lorsque les valeurs extrêmes (Aₙ) de la grandeur oscillante dépassent une valeur seuil (A2) prédéterminée en fonction de la valeur mesurée (DA) du taux de croissance.

4. Procédé selon la revendication 1 ou 2, **caractérisé en ce que** l'on prédétermine une valeur seuil (DA1) pour le taux de croissance (DA) et on met en oeuvre là stratégie de stabilisation lorsque le taux de croissance (DA) dépasse cette valeur seuil (DA1).

5. Procédé selon la revendication 1 ou 2, **caractérisé en ce que** l'on prédétermine un nombre (N) - qui dépend du taux de croissance - de périodes d'oscillation et l'on intervient dans la commande du réacteur selon la stratégie de stabilisation lorsque l'oscillation de la grandeur physique se maintient pendant la durée de ces périodes d'oscillation.

6. Procédé selon l'une des revendications 1 à 5, **caractérisé en ce que** la stratégie de stabilisation à mettre en oeuvre est choisie en fonction du taux de croissance (DA) parmi un certain nombre de stratégies de stabilisation prédéterminées.

7. Procédé selon la revendication 6, **caractérisé en ce que**, en tant que stratégie de stabilisation dans une phase d'alarme de niveau bas, on intervient dans la commande du réacteur de telle manière qu'on bloque une augmentation de la puissance en éloignant du coeur du réacteur certains éléments absorbeurs.

8. Procédé selon la revendication 6 ou 7, **caractérisé en ce que**, en tant que stratégie de stabilisation dans une phase d'alarme d'un premier niveau plus élevé, on intervient dans la commande du réacteur de telle manière qu'on réduit fonctionnellement la puissance en insérant lentement dans le coeur du réacteur certains éléments absorbeurs.

9. Procédé selon l'une des revendications 6 à 8, **caractérisé en ce que**, en tant que stratégie de stabilisation dans une phase d'alarme d'un deuxième niveau plus élevé, on insère rapidement dans le coeur du réacteur plusieurs barres de commande.

10. Procédé selon l'une des revendications 6 à 9, **caractérisé en ce que**, en tant que stratégie de stabilisation dans une phase d'alarme d'un niveau maximal, la puissance du réacteur est ramenée le plus vite possible à zéro.

11. Procédé selon l'une des revendications 1 à 10, **caractérisé en ce que** plusieurs zones réparties sur le coeur du réacteur sont regroupées en un système et dans chaque zone du système est respectivement formée une valeur mesurée (S) locale pour la grandeur physique et une valeur mesurée (DA) pour le taux de croissance de cette grandeur et on effectue une décision préalable à l'aide de ces valeurs mesurées pour chaque zone pour savoir si on doit mettre en oeuvre la stratégie de stabilisation et la stratégie de stabilisation doit être mise en oeuvre seulement lorsque cela a été décidé dans au moins un nombre minimal prédéterminé de décisions préalables.

12. Procédé selon la revendication 11, **caractérisé en ce que** la décision est réalisée de façon redondante pour plusieurs systèmes différents dans des zones réparties sur le coeur et qu'elle est bloquée tant qu'il n'a pas été pris de décision en faveur de la stratégie de stabilisation dans un nombre minimal (Np) prédéterminé de systèmes.

13. Procédé selon la revendication 12, **caractérisé en ce que** les zones sont associées aux systèmes de telle manière que des zones voisines appartiennent à des systèmes différents et que chaque zone n'appartient qu'à un seul système.

14. Procédé selon l'une des revendications Il à 13, **caractérisé en ce que** dans chaque zone on utilise plusieurs détecteurs pour former les valeurs mesurées et que dans chaque zone on n'a recours qu'à un nombre minimal prédéterminé de ces détecteurs pour parvenir à la décision.

15. Procédé pour faire fonctionner un réacteur à eau bouillante qui est instable du fait de l'oscillation locale d'une grandeur physique, qui est commandé par des paramètres fournis d'après le fonctionnement et qui est surveillé par une unité de surveillance laquelle forme des valeurs mesurées locales associées aux zones respectives dans au moins trois demi périodes successives de l'oscillation en mesurant la grandeur physique dans différentes zones du coeur du réacteur et, après qu'une limite de bruit prédéterminée de ces valeurs mesurées a été dépassée, continue de faire fonctionner le réacteur selon les paramètres prédéterminés aussi longtemps qu'aucune interruption du réacteur n'est nécessaire,
**caractérisé en ce que**, d'après au moins un critère de surveillance parmi une hiérarchie de phases d'alarme, l'unité de surveillance sélectionne en tant que phase d'alarme momentanée la phase d'alarme maximale dont le critère de surveillance est satisfait par les valeurs mesurées d'un nombre minimal prédéterminé de zones et
met en oeuvre automatiquement une stratégie de stabilisation au plus tôt à un instant situé plusieurs périodes d'oscillation après que la limite de bruit a été dépassée, pour lequel
I. une phase d'alarme (I) de bas niveau prévoit en tant que stratégie de stabilisation une intervention dans la commande du réacteur selon laquelle on empêche que certains éléments absorbeurs soient retirés du coeur du réacteur, ce qui correspond à une augmentation fonctionnelle de la puissance du réacteur et
II. au moins une phase d'alarme (II) de niveau plus élevé prévoit en tant que stratégie de stabilisation une intervention dans la commande du réacteur pour laquelle plusieurs éléments absorbeurs sont rentrés dans le coeur, au sens d'une réduction de la puissance du réacteur.

16. Procédé selon la revendication 15, **caractérisé en ce qu'**en tant que stratégie de stabilisation dans une phase d'alarme d'un premier niveau plus élevé, plusieurs barres de commande sont lentement insérées, ce qui correspond à une réduction de la puissance et dans une phase d'alarme (III) d'un deuxième niveau plus élevé plusieurs barres de commande sont rapidement insérées.

17. Procédé selon la revendication 15 ou 16, **caractérisé en ce que**, en tant que stratégie de stabilisation dans une phase d'alarme maximale (IV), la puissance du réacteur est ramenée le plus rapidement possible à zéro, au sens d'un arrêt d'urgence du réacteur (SCRAM).

18. Procédé selon l'une des revendications 15 à 17, **caractérisé en ce que** l'on détermine par le critère de surveillance un instant, ou au moins les paramètres pour déterminer cet instant, où le réacteur continue de fonctionner normalement avant de mettre en oeuvre une stratégie de stabilisation correspondant à une des phases d'alarme actuelle.

19. Procédé selon l'une des revendications 15 à 18, **caractérisé en ce que**, pour des valeurs d'amplitude (An) qui dépassent la limite de bruit, le critère de surveillance n'est efficace que jusqu'à ce que les valeurs d'amplitude détectées correspondent à une fréquence située dans une bande de fréquence critique prédéterminée.

20. Procédé selon la revendication 19, **caractérisé en ce que** l'on prédéfinit la plage comprise entre 0,3 et 0,7 Hz en tant que bande de fréquence critique.

21. Procédé selon la revendication 19 ou 20, **caractérisé en ce que** les valeurs mesurées (A₍ₜ₎) locales sont analysées selon une fréquence de balayage supérieure à environ 20 Hz, avantageusement d'environ 50 Hz, pour savoir si des valeurs d'amplitude (Aₙ) apparaissent et si les critères de surveillance sont remplis.

22. Procédé selon l'une des revendications 19 à 21, **caractérisé en ce que** le taux de croissance (DA) des amplitudes est déterminé à partir des valeurs mesurées locales et les critères de surveillance dépendent du taux de croissance (DA) détecté.

23. Procédé selon la revendication 22, **caractérisé en ce que**, pour chaque phase d'alarme issue du taux de croissance (DA), on détermine une valeur seuil (A1, A2, A3) pour les valeurs d'amplitude détectées et la stratégie de stabilisation correspondant à la phase d'alarme actuelle n'est mise en oeuvre que lorsque cette valeur seuil est dépassée.

24. Procédé selon la revendication 22, **caractérisé en ce que** l'on détermine pour chaque phase d'alarme une valeur seuil (DA2) pour le taux de croissance (DA) déterminé à partir des amplitudes détectées et la stratégie de stabilisation correspondant à la phase d'alarme actuelle est sélectionnée et mise en oeuvre selon que cette valeur seuil est dépassée.

25. Procédé selon l'une des revendications 15 à 24, **caractérisé en ce que** plusieurs systèmes redondants fonctionnent dans l'unité de surveillance, chaque système enregistrant les valeurs mesurées locales de plusieurs zones réparties sur tout le coeur du réacteur et formant une phase d'alarme actuelle associée à chacune des zones ; que l'on sélectionne une phase d'alarme parmi les phases d'alarme actuelles des systèmes particuliers et que l'on met en oeuvre la stratégie de stabilisation qui correspond à la phase d'alarme sélectionnée.

26. Procédé selon l'une des revendications 15 à 25, **caractérisé en ce que** l'on analyse ensuite chaque valeur mesurée (S) locale pour savoir si elle prend une valeur extrême à des intervalles de temps équidistants et que l'on a recours à cette valeur mesurée (S) locale pour sélectionner la phase d'alarme actuelle uniquement tant qu'elle présente une succession équidistante de ces valeurs extrêmes.

27. Procédé pour surveiller la stabilité d'un coeur de réacteur dans un réacteur à eau bouillante par rapport à une oscillation locale déstabilisante d'une grandeur physique, comportant les caractéristiques suivantes :
a) plusieurs détecteurs (4a, 4b, 4c, 4d) pour mesurer la grandeur physique sont respectivement disposés dans plusieurs zones (2', 2") du coeur de réacteur (1), les signaux de sortie de ces détecteurs sont regroupés en un nombre Mp de canaux de zone et une zone (2") et des détecteurs (4a, ..., 4d) qui y sont disposés pour produire un signal de zone (S, Aₙ, Tₙ, DA) sont respectivement associés à chaque canal de zone (4 à 19),
b) les canaux de zone sont regroupés en un nombre P de canaux de système (20, 20') en ce qu'ils produisent un signal de système et
c) les signaux de système sont associés à un canal final (24) en ce qu'ils produisent un signal final (" alarme "),
d) un signal final d'alarme étant établi dans chaque signal final à l'aide de phases de surveillance et de phases de sélection et à l'aide du signal final on peut mettre en oeuvre une stratégie de stabilisation dans un procédé selon l'une des revendications 1 à 26 dès qu'au moins dans un nombre prédéterminé Np de canaux de système on a à chaque fois vérifié si dans un nombre minimal Nmp du canal de système (p) concerné un critère de surveillance est satisfait sur plusieurs périodes d'oscillation,
e) le signal de sortie de chaque détecteur (4a, 4b, 4c, 4d) agit sur tout au plus un seul signal de zone et chaque signal de zone tout au plus sur un seul signal de système et
f) les signaux de zones d'un canal de système sont respectivement formés à partir des signaux de sortie de détecteurs qui se trouvent dans des zones réparties dans la section transversale (1 ) du coeur de réacteur de telle manière que les zones à chaque fois voisines d'une telle zone contiennent des détecteurs - de préférence uniquement de tels détecteurs - dont les signaux de sortie sont associés à des canaux de zone d'autres canaux de système.

28. Dispositif pour surveiller la stabilité d'un réacteur à eau bouillante par rapport à une oscillation locale déstabilisante d'une grandeur physique du coeur (1), comportant une phase de sélection de système (24), un nombre P de phases de sélection de zone (20, 20') pour chaque phase de sélection de zone un nombre Mp de phases de surveillance de zone et pour chaque phase de surveillance de zone (4, ..., 19) une phase de détection (4, 11) comportant plusieurs détecteurs (4a, 4b, 4c, 4d) disposés à l'intérieur d'une zone du coeur et associés à cette phase de surveillance de zone, comportant les caractéristiques suivantes :
a) les détecteurs (4a, 4b, 4c, 4d) respectivement associés à une phase de surveillance de zone (4a, ..., 19) fournissent des signaux de mesure regroupés en un signal de zone (S) pour la grandeur physique, chaque signal de zone (S) est surveillé dans la phase de surveillance de zone (17) associée aux détecteurs selon un critère de surveillance et chaque phase de surveillance de zone fournit un signal de zone qui contient un signal de surveillance de zone,
b) chaque signal de zone est soumis au moins à une des phases de sélection de zone (20, 20') qui forme à partir d'un nombre minimal (Nmp) prédéterminé de signaux de surveillance de zone un signal de surveillance de système et
c) chaque signal de surveillance de système est acheminé à la phase de sélection de système (24) qui, à l'aide d'un nombre minimal prédéterminé de systèmes (Np = 2), fournit un signal de surveillance final grâce auquel on peut mettre en oeuvre une stratégie de stabilisation selon un procédé d'après l'une des revendications 1 à 26.

29. Dispositif pour surveiller la stabilité d'un coeur de réacteur dans un réacteur à eau bouillante par rapport à une oscillation locale déstabilisante d'une grandeur physique, comportant les caractéristiques suivantes
a) plusieurs détecteurs (4a, ..., 4d) pour mesurer la grandeur physique sont respectivement disposés dans plusieurs zones (2', 2") du coeur de réacteur (1) et les signaux de sortie de plusieurs détecteurs d'une zone (2', 2") sont respectivement regroupés pour constituer un signal de zone (S) associé,
b) une phase d'exploitation (12) qui identifie dans le signal de zone l'apparition de valeurs extrêmes (An) de la grandeur physique est associée à chaque signal de zone et le taux de croissance (DA) de la valeur extrême est établi dans cette zone lorsqu'il y a une oscillation dont la fréquence est constante,
c) au moins une phase de surveillance (17, 23) qui forme un signal d'alarme est associée aux phases d'exploitation (12) dès qu'au moins dans un nombre prédéterminé (Nmp = 2) de zones les valeurs extrêmes satisfont à un critère de surveillance local qui dépend du taux de croissance (DA) établi et
d) on peut mettre en oeuvre à l'aide du signal d'alarme une stratégie de stabilisation selon un procédé d'après l'une des revendications 1 à 26.

30. Dispositif selon la revendication 29, **caractérisé en ce que** la phase de surveillance (51 ) intervient lorsque les valeurs extrêmes de la grandeur physique satisfont à une valeur limite (A1) prédéterminée en fonction du taux de croissance établi.

31. Dispositif selon la revendication 30, **caractérisé en ce que** la phase de surveillance forme plusieurs valeurs limites (A1, A2, A3) qui dépendent du taux de Croissance (DA) établi et le signal d'alarme choisi indique laquelle des valeurs limite est dépassée par les valeurs extrêmes identifiées.

32. Dispositif pour surveiller la stabilité d'un coeur de réacteur dans un réacteur à eau bouillante par rapport à une oscillation locale déstabilisante d'une grandeur physique, comportant les caractéristiques suivantes :
a) plusieurs détecteurs (4a, 4b, 4c, 4d) destinés à mesurer la grandeur physique sont respectivement disposés dans plusieurs zones (2', 2") du coeur de réacteur (1) et les signaux de sortie de plusieurs détecteurs d'une zone sont à chaque fois regroupés pour constituer un signal de zone (S) associé,
b) à chaque signal de zone est associée une phase d'exploitation (12) qui identifie dans le signal de zone (S) l'apparition d'une oscillation dont la fréquence est constante,
c) aux phases d'exploitation associées aux différents signaux de zone sont associés des moyens (17) de surveillance qui sélectionnent une phase d'alarme parmi une hiérarchie de phases d'alarme (I, II, III, IV) d'après des critères de surveillance prédéterminés (valeurs limite A1, A2, A3, A4) pour les oscillations identifiées dans au moins un nombre (Nmp = 2) prédéterminé de zones et déterminent en fonction de la phase d'alarme sélectionnée un instant où un ordre d'urgence (" alarme ") est lancé pour mettre en oeuvre une stratégie de stabilisation qui correspond à une des phases d'alarme selon un procédé d'après l'une des revendications 1 à 26.
